# EUROPEAN PATENT APPLICATION

(11) **EP 4 668 117 A1**
(43) Date of publication of application: **24.12.2025**
(21) Application number: 23922961.0
(22) Date of filing: 26.12.2023
(51) Int. Cl.: G06F 11/07

(54) **INFORMATION PROCESSING DEVICE, INFORMATION PROCESSING METHOD, AND PROGRAM**

(30) Priority: 14.02.2023 JP 2023020465
(71) Applicant: Fsas Technologies Inc., Nakahara-ku Kawasaki-shi, Kanagawa 211-0012 (JP)
(72) Inventor: KONDO, Reiko, Kawasaki-shi, Kanagawa 211-8588 (JP); SHIRAISHI, Takashi, Kawasaki-shi, Kanagawa 211-8588 (JP); OGIHARA, Kazutaka, Kawasaki-shi, Kanagawa 211-8588 (JP); FUKUMURA, Hiromi, Kawasaki-shi, Kanagawa 211-8588 (JP); MICHIZONO, Masatoshi, Kawasaki-shi, Kanagawa 211-8588 (JP); SUZUKI, Tomonori, Kawasaki-shi, Kanagawa 211-8588 (JP)
(74) Representative: Hoffmann Eitle
(86) International application number: PCT/JP2023/046538
(87) International publication number: WO 2024/171628

(57) **Abstract**

It is possible to enable appropriate identification of a node that is the cause of an alert.

A processing unit 12 calculates a base score coefficient indicating a weight for each node, based on caller-callee relationship between nodes in the same layer, the caller-callee relationship being indicated in configuration information. The processing unit 12 calculates a base score for each node, based on alert information and the base score coefficients, the base score being based on an alert. The processing unit 12 calculates, for each pair of a node and its adjacent node identified based on the configuration information, a propagation score by multiplying the base score of the adjacent node by a propagation score coefficient based on dependency relationship between the node and the adjacent node. The processing unit 12 calculates, for each of the plurality of nodes, a failure score by summing the base score of the node and the propagation score corresponding to a pair of the node and its adjacent node. The processing unit 12 identifies one or more nodes that are candidates for the cause of the alert among the plurality of nodes, based on the failure scores of the plurality of nodes.

## Description

### Technical Field

The embodiments discussed herein relate to an information processing apparatus, an information processing method, and a computer program.

### Background Art

In the operation management of an information processing system, the location of the cause of a failure may be identified when the failure occurs.

For example, a monitoring server is proposed, which sums up, for each server, points corresponding to central processing unit (CPU)/memory usage, the number of processes, the number of inter-server communications, an active or inactive state, and the degree of influence from other servers, and identifies the location of the cause of a failure based on the total points.

In addition, a failure cause identifying system is proposed, in which a related node related to a node in which an abnormality has occurred and individual metrics of the related node are set as objective variables, the others are set as candidates for explanatory variables, and for each objective variable, explanatory variables usable for a prediction model are selected from the candidates. This proposed failure cause identifying system determines an abnormality of an objective variable through Just-In-Time (JIT) determination, detects the objective variable for which the abnormality is detected and explanatory variables thereof, extracts the number of objective variables common to the individual explanatory variables of the objective variable for which the abnormality is detected, and sets the explanatory variable assigned the largest number of common objective variables as the leading candidate for the cause of the abnormality.

### Citation List

### Patent Literature

PTL1: Japanese Laid-open Patent Publication No. 2011-90547
PTL2: Japanese Laid-open Patent Publication No. 2021-149849

### Summary of Invention

### Technical Problem

In an information processing system, nodes belonging to different layers, such as communication devices, physical machines, virtual machines, and applications, operate in cooperation with one another. An abnormality occurring in a certain node may affect other nodes belonging to the same layer or different layers and cause abnormalities in those other nodes. Therefore, when an alert making a notification of a failure is generated in the information processing system, it is not easy to identify a node that is the root cause of the alert.

In one aspect, an object of the present disclosure is to enable appropriate identification of a node that is the cause of an alert.

### Solution to Problem

In one aspect, an information processing apparatus is provided. The information processing apparatus includes a storage unit and a processing unit. The storage unit stores configuration information indicating inter-node connections between a plurality of nodes included in an information processing system, each of the plurality of nodes belonging to any one of a plurality of layers in the information processing system, and alert information indicating an alert generated in the information processing system. The processing unit calculates a base score coefficient indicating a weight for each of the plurality of nodes, based on caller-callee relationship between nodes in the same layer, the caller-callee relationship being indicated in the configuration information. The processing unit calculates a base score for each of the plurality of nodes, based on the alert information and the base score coefficient, the base score being based on the alert. The processing unit calculates, for each of pairs, each including a respective node of the plurality of nodes and an adjacent node adjacent to the respective node, a propagation score by multiplying the base score of the adjacent node by a propagation score coefficient based on dependency relationship between the respective node and the adjacent node, the adjacent node being identified based on the configuration information. The processing unit calculates, for each node of the plurality of nodes, a failure score by summing the base score of the node and the propagation score corresponding to a pair of the node and its adjacent node. The processing unit identifies one or more nodes that are candidates for a cause of the alert among the plurality of nodes, based on the failure scores of the plurality of nodes.

According to one aspect, an information processing method executed by a computer is provided. In addition, according to one aspect, a computer program executed by a computer is provided.

### Advantageous Effects of Invention

In one aspect, it is possible to enable appropriate identification of a node that is the cause of an alert.

### Brief Description of Drawings

[FIG. 1] FIG. 1 is a diagram for describing an information processing apparatus according to a first embodiment.
[FIG. 2] FIG. 2 illustrates an example of an information processing system according to a second embodiment.
[FIG. 3] FIG. 3 illustrates an example of hardware of a failure location estimation server.
[FIG. 4] FIG. 4 illustrates an example of functions of the failure location estimation server.
[FIG. 5] FIG. 5 illustrates an example of a monitoring target system.
[FIG. 6] FIG. 6 illustrates an example of calculating a base score coefficient for each node within the same layer.
[FIG. 7] FIG. 7 illustrates an example of the magnitude relationship among the base score coefficients of nodes in different layers.
[FIG. 8] FIG. 8 illustrates an example of integrating base score coefficients in the vertical direction and the horizontal direction.
[FIG. 9] FIG. 9 illustrates an example of a method of calculating a failure score.
[FIG. 10] FIG. 10 illustrates an example of a node table and an edge table.
[FIG. 11] FIG. 11 illustrates an example of an alert table.
[FIG. 12] FIG. 12 illustrates an example of a base score coefficient table.
[FIG. 13] FIG. 13 illustrates an example of a propagation score coefficient table.
[FIG. 14] FIG. 14 illustrates an example of a score table.
[FIG. 15] FIG. 15 illustrates a display example of a failure location estimation result screen.
[FIG. 16] FIG. 16 is a flowchart illustrating an example of base score coefficient acquisition.
[FIG. 17] FIG. 17 is a flowchart illustrating an example of base score coefficient calculation.
[FIG. 18] FIG. 18 illustrates a specific example of the base score coefficient calculation.
[FIG. 19] FIG. 19 is a flowchart illustrating an example of failure location estimation.
[FIG. 20] FIG. 20 illustrates a first modification of the propagation score coefficient table.
[FIG. 21] FIG. 21 illustrates a second modification of the propagation score coefficient table.
[FIG. 22] FIG. 22 illustrates an example of another method of calculating a failure score.

### Description of Embodiments

Hereinafter, embodiments will be described with reference to the drawings.

### [First Embodiment]

A first embodiment will be described.

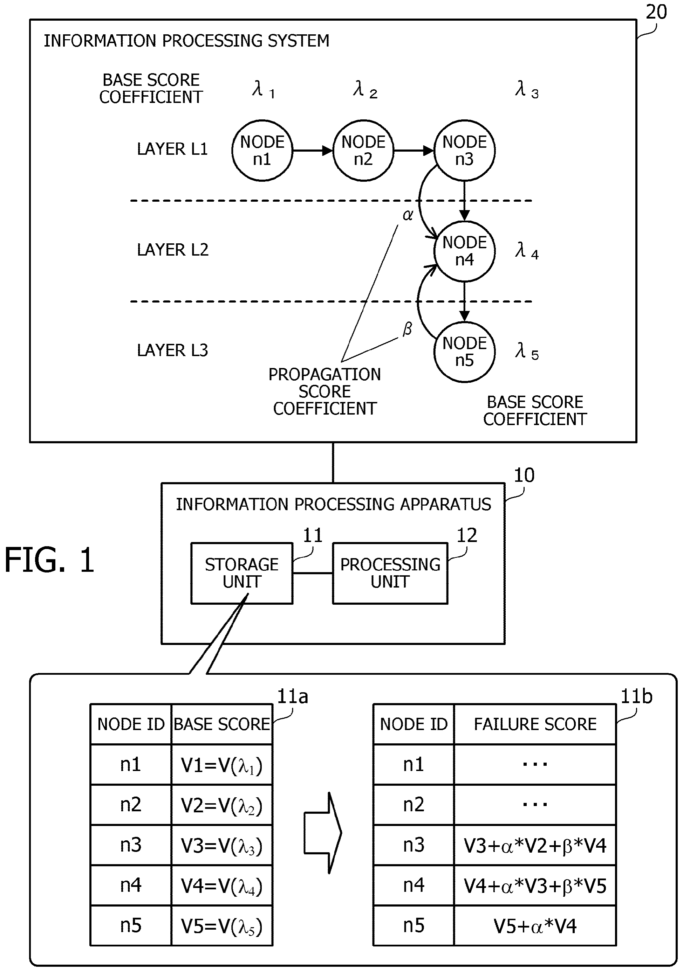

FIG. 1 is a diagram for describing an information processing apparatus according to the first embodiment.

The information processing apparatus 10 is connected to an information processing system 20. The information processing system 20 includes a plurality of nodes. The information processing apparatus 10 may be included in the information processing system 20. Each of the plurality of nodes is an element of the information processing system 20, and is, for example, any one of a communication device, a physical machine, a virtual machine, an application, and others.

The nodes are classified into a plurality of layers such as a communication device layer, a physical machine layer, a virtual machine layer, and an application layer. In this example, the application layer is the uppermost layer. The virtual machine layer is one layer below the application layer. The physical machine layer is one layer below the virtual machine layer. The communication device layer is one layer below the physical machine layer.

In the example of the first embodiment, three layers L1, L2, and L3 are illustrated. The layer L1 is the uppermost layer. The layer L2 is one layer below the layer L1. The layer L3 is one layer below the layer L2. In this connection, the number of layers managed by the information processing apparatus 10 may be two or more.

The information processing apparatus 10 supports identification of a node that is the cause of alerts generated in the information processing system 20. The information processing apparatus 10 includes a storage unit 11 and a processing unit 12. The storage unit 11 may be a volatile semiconductor memory such as a random access memory (RAM) or a non-volatile storage device such as a hard disk drive (HDD) or a flash memory. The processing unit 12 is, for example, a processor such as a CPU, a graphics processing unit (GPU), or a digital signal processor (DSP). The processing unit 12 may include a special-purpose electronic circuit such as an application specific integrated circuit (ASIC) or a field programmable gate array (FPGA). The processor executes a program stored in a memory (or the storage unit 11) such as a RAM. A set of a plurality of processors may be referred to as a "multiprocessor" or simply as a "processor".

The storage unit 11 stores configuration information. The configuration information includes information on a plurality of nodes included in the information processing system 20 and the inter-node connections between the nodes. The inter-node connections include connections indicating that a certain node is executed using resources of another node, that a certain node is connected to another node for operation, and that a certain node calls another node. For example, the inter-node connections are represented by a graph in which the nodes are connected by edges. Two nodes with a smaller number of edges therebetween have a stronger connection therebetween. In the case where the number of edges existing between two nodes is less than or equal to a predetermined number of edges k, these two nodes are said to be adjacent to each other. The value k is an integer of 1 or more. For example, k = 1.

In addition, the configuration information includes information indicating the dependency relationship between the nodes. Each of the plurality of nodes included in the information processing system 20 may have the following dependency relationship with other nodes within the same layer and across different layers.

The dependency relationship within the same layer refers to a relationship in which a certain node calls another node in the same layer. In this case, the caller node depends on the callee node. For example, a relationship in which a certain application calls another application and a relationship in which a certain virtual machine calls another virtual machine each correspond to the dependency relationship within the same layer.

The dependency relationship across different layers refers to a hierarchical relationship across layers to which nodes belong. A node in an upper layer depends on a node in a lower layer. For example, an application is executed by a virtual machine. In this case, the application depends on the virtual machine. The virtual machine is depended upon by the application. In addition, for example, a virtual machine is executed by a physical machine. In this case, the virtual machine depends on the physical machine. The physical machine is depended upon by the virtual machine. Furthermore, for example, a physical machine is connected to an L2 (Layer 2) switch in order to communicate with other physical machines. In this case, the physical machine depends on the L2 switch. The L2 switch is depended upon by the physical machine. Further, for example, the L2 switch is connected to a router in order to communicate with a higher-level network. In this case, the L2 switch depends on the router. The router is depended upon by the L2 switch.

The dependency relationship is represented by, for example, directed edges connecting the nodes in the above-mentioned graph. That is, the node at the start point of a directed edge depends on the node at the end point thereof. The node at the end point of the directed edge is depended upon by the node at the start point thereof.

In one example, the information processing system 20 includes a plurality of nodes including nodes n1, n2, n3, n4, and n5. It is assumed that the node identifiers (IDs) of the nodes n1, n2, n3, n4, and n5 are n1, n2, n3, n4, and n5, respectively. The nodes n1, n2, and n3 belong to the layer L1. The node n4 belongs to the layer L2. The node n5 belongs to the layer L3. The node n1 calls the node n2. That is, the node n1 depends on the node n2. The node n2 calls the node n3. That is, the node n2 depends on the node n3. The node n3 depends on the node n4. The node n4 depends on the node n5. Nodes in the layers L2 and L3 for operating the nodes n1 and n2 are not illustrated.

In this case, the configuration information includes, for example, information indicating the nodes n1 to n5, and information on the directed edges connecting the nodes, the directed edges indicating the above-described dependency relationship between the nodes n1 to n5. The configuration information also includes information on the layers to which the nodes n1 to n5 belong.

The storage unit 11 also stores alert information. The alert information indicates alerts generated in the information processing system 20 during a predetermined period, and the abnormality level of each alert. A higher abnormality level of an alert indicates a higher degree of abnormality of the event notified of by the alert. It is also said that the abnormality level indicates the weight of the alert. Alerts may be output by the plurality of nodes individually. The predetermined period may be set to, for example, a period during which alerts have continued to be generated at time intervals shorter than a predetermined time interval. This is because a group of alerts consecutively generated at time intervals shorter than a certain time interval is highly likely to have a common cause. In this case, the certain time interval is determined in advance according to the information processing system 20.

With respect to a group of alerts generated in the information processing system 20, the processing unit 12 estimates a node that may be the root cause of the alerts by scoring and evaluating the degree of contribution of each node to the alerts. An index indicating the degree of contribution of each node to alerts is referred to as a failure score. For example, the higher the failure score of a node, the higher the degree of contribution of the node to alerts. Therefore, a higher failure score of a node indicates a higher likelihood that the node is the cause of the alerts.

The processing unit 12 calculates a base score coefficient indicating a weight for each of the plurality of nodes, based on the caller-callee relationship between nodes in the same layer, the caller-callee relationship being indicated in the configuration information. In the caller-callee relationship between nodes in the same layer, if a failure occurs in a callee node, it is highly likely that a failure also occurs in the caller node. Therefore, the processing unit 12 calculates the base score coefficient of each node such that a node called by many nodes in the same layer is given a high degree of importance and a node called by a node having a high degree of importance is also given a high degree of importance. Therefore, it may be considered that the base score coefficient is an index indicating the likelihood of being a failure location. The processing unit 12 may use, for example, PageRank (registered trademark) as a method of calculating such base score coefficients.

For example, the processing unit 12 calculates base score coefficients λ₁, λ₂, and λ₃ for the nodes n1, n2, and n3 belonging to the layer L1, respectively, using PageRank. λ₁, λ₂, and λ₃ are positive real numbers. The node n1 calls the node n2, and the node n2 calls the node n3. On the basis of this caller-callee relationship, λ₁ < λ₂ < λ₃ are obtained, for example. The processing unit 12 also calculates base score coefficients λ₄ and λ₅ for the nodes n4 and n5 belonging to the layers L2 and L3, respectively. λ₄ and λ₅ are positive real numbers. In the case where there is no caller-callee relationship between the nodes of the layers L2 and L3, the processing unit 12 sets λ₄ and λ₅ to predetermined values set for the layers L2 and L3. The predetermined base score coefficients are set such that higher base score coefficients are set for lower layers among different layers. For example, a base score coefficient a for the layer L1, a base score coefficient b for the layer L2, and a base score coefficient c for the layer L3 are determined in advance such as to satisfy a < b < c.

Then, the processing unit 12 normalizes λ₁, λ₂, and λ₃ such that the maximum base score coefficient λ₃ in the layer L1 becomes a. Specifically, the processing unit 12 calculates the base score coefficients λ₁, λ₂, and λ₃ as λ₁ = λ₁ * a/λ₃, λ₂ = λ₂ * a/λ₃, and λ₃ = λ3 * a/λ₃. In the case where the caller-callee relationship between the nodes in the layers L2 and L3 is not considered, the processing unit 12 sets λ₄ = b and λ₅ = c. In this way, the processing unit 12 calculates the base score coefficients λ₁ to λ₅ for the nodes n1 to n5, respectively.

The processing unit 12 calculates a base score for each of the plurality of nodes, based on the alert information and the base score coefficients, the base score being based on the alerts. The base scores serve as scores used for calculating the failure scores. In one example, the processing unit 12 calculates a base score for each node that has output alerts, by calculating, for each abnormality level, the product of the number of alerts with the abnormality level and the abnormality level, summing the calculated products, and multiplying the sum by the base score coefficient of the node. The processing unit 12 assigns a base score "0" to each node that has not output any alert.

For example, the processing unit 12 calculates the base score for each of the nodes n1 to n5 according to the number of alerts generated in the node n1 to n5 during a predetermined period and the abnormality levels of the alerts. The base score of each node, which is calculated based on the base score coefficient of the node, is represented as follows. The base score V1 of the node n1 is V1 = V(λ₁). The base score V2 of the node n2 is V2 = V(λ₂). The base score V3 of the node n3 is V3 = V(λ₃). The base score V4 of the node n4 is V4 = V(λ₄). The base score V5 of the node n5 is V5 = V(λ₅). For example, V() denotes the following calculation: (Base score coefficient) × { (Abnormality level 1) × (The number of alerts with abnormality level 1 in the corresponding node) + (Abnormality level 2) × (The number of alerts with abnormality level 2 in the corresponding node) + ... + (Abnormality level m) × (The number of alerts with abnormality level m in the corresponding node)}. Here, m is an integer of 1 or more representing an abnormality level of the alerts. For example, the processing unit 12 stores the base scores V1 to V5 of the nodes n1 to n5 in a table 11a in the storage unit 11. The table 11a is information that holds the base scores of the nodes n1 to n5.

The processing unit 12 calculates, for each pair of a certain node and its adjacent node identified based on the configuration information, a propagation score by multiplying the base score of the adjacent node by a propagation score coefficient based on the dependency relationship between the certain node and the adjacent node. Here, the propagation score is a score that incorporates the influence of the base score of the adjacent node into the failure score of the certain node. The propagation score coefficient is a coefficient that determines the degree to which the influence of the base score of the adjacent node is incorporated into the failure score of the certain node.

The propagation score coefficient is α in the case where the adjacent node depends on the certain node. The propagation score coefficient is β in the case where the adjacent node is depended upon by the certain node, that is, in the case where the certain node depends on the adjacent node. Both α and β are positive real numbers. In addition, α > β. This is because, of two nodes adjacent to each other, the depended-on node is more likely to be a failure location. There is a case where a plurality of adjacent nodes exist for a node of interest. In this case, with respect to the node of interest, the processing unit 12 calculates, for each adjacent node, a propagation score to be applied to the adjacent node.

For example, assume that the above-mentioned predetermined number of edges k is 1. In this case, for example, the processing unit 12 calculates the propagation scores of the nodes n3 and n5 toward the node n4 as follows. First, the processing unit 12 identifies the nodes n3 and n5 as the adjacent nodes to the node n4, based on the configuration information. The node n3 depends on the node n4. Therefore, the processing unit 12 calculates the propagation score of the node n3 toward the node n4 as α * V3. The node n5 depends on the node n4. Therefore, the processing unit 12 calculates the propagation score of the node n5 toward the node n4 as β * V5. The processing unit 12 similarly calculates the propagation scores of adjacent nodes toward the other nodes.

Then, the processing unit 12 calculates, for each of the plurality of nodes, a failure score by summing the base score of the node and the propagation score corresponding to a pair of the node and its adjacent node. For example, the processing unit 12 calculates the failure score for the node n3 as V3 + α * V2 + β * V4. The processing unit 12 calculates the failure score for the node n4 as V4 + α * V3 + β * V5. The processing unit 12 calculates the failure score for the node n5 as V5 + α * V4. A table 11b is information that holds the failure scores of the nodes n1 to n5. The processing unit 12 calculates the failure scores of the nodes n1 and n2 in the same manner. However, in FIG. 1, nodes in lower layers with respect to the nodes n1 and n2 are omitted, and therefore the illustration of the failure scores of the nodes n1 and n2 is also omitted. In this way, using the propagation scores, the influence of an event occurring in an adjacent node to a node is appropriately incorporated into the failure score of the node.

The processing unit 12 identifies one or more nodes that are candidates for the cause of the alerts from among the plurality of nodes, based on the failure scores of the plurality of nodes. For example, in the above example, the processing unit 12 compares the failure scores of the nodes n1 to n5, and identifies a node having a high failure score as a node that is highly likely to be the cause of the alerts. An identified node is estimated as the root cause location that has caused the alerts, and corresponds to a candidate for the failure location. For example, the processing unit 12 may display, on a display device, the identified one or more nodes in descending order of likelihood of being the root cause of the alerts, to present them to the user.

As described above, with the information processing apparatus 10, the base score coefficients indicating the weights for the plurality of nodes are calculated based on the caller-callee relationship between the nodes in the same layer, the caller-callee relationship being indicated in the configuration information stored in the storage unit 11. In addition, the base score coefficients are calculated on the basis of the dependency relationship across different layers. The base score based on the alerts is calculated for each of the plurality of nodes, based on the alert information and the base score coefficients stored in the storage unit 11. For each pair of one of the plurality of nodes and its adjacent node identified based on the configuration information, the propagation score is calculated by multiplying the base score of the adjacent node by the propagation score coefficient based on the dependency relationship between the node and the adjacent node. Then, for each of the plurality of nodes, the failure score is calculated by summing the base score of the node and the propagation score corresponding to a pair of the node and its adjacent node. Then, one or more nodes that are candidates for the cause of the alerts are identified from among the plurality of nodes, based on the failure scores of the plurality of nodes.

Thus, the information processing apparatus 10 is able to appropriately identify a node that is the cause of the alerts.

Note here that a large number of nodes operate in cooperation with each other in the information processing system 20. For this reason, when a failure occurs in the information processing system, the failure propagates and a large number of alerts are generated. Therefore, it is not easy to identify a node that is the root cause of the failure.

To address this, the information processing apparatus 10 propagates the base score of each node to its adjacent node using the propagation score coefficient based on the dependency relationship between the node and the adjacent node, to calculate the failure score for each node. On the basis of the failure scores, the information processing apparatus 10 is able to appropriately identify a node that is the cause of the alerts. In particular, the information processing apparatus 10 is able to incorporate the importance of each node in the same layer into the base score of the node, by weighting each node within the layer using the base score coefficients according to the caller-callee relationship between the nodes within the layer. Thus, the information processing apparatus 10 is able to appropriately evaluate the base scores of the nodes, and is thus able to improve the estimation accuracy of a node that is the cause of the alerts based on the failure scores calculated based on the base scores. For example, the information processing apparatus 10 is able to assist the user in smoothly identifying the location of the cause of the failure by outputting and presenting information on the identified one or more nodes to the user. As a result, the information processing apparatus 10 is able to contribute to quick troubleshooting.

### [Second Embodiment]

Next, a second embodiment will be described.

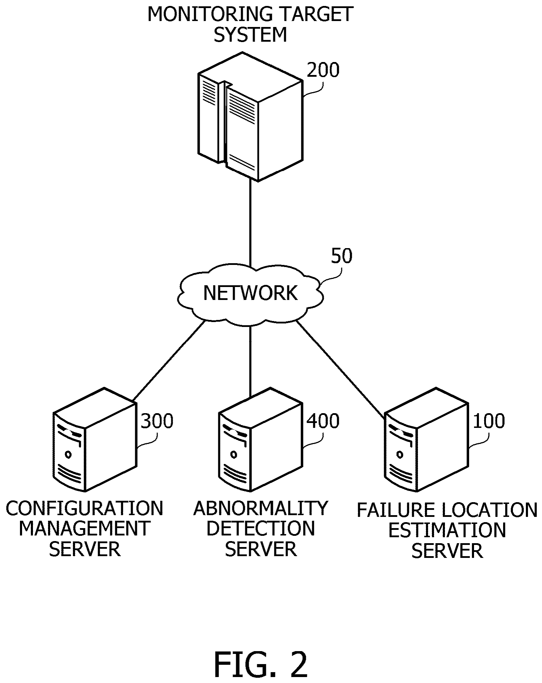

FIG. 2 illustrates an example of an information processing system according to the second embodiment.

The information processing system according to the second embodiment includes a failure location estimation server 100, a monitoring target system 200, a configuration management server 300, and an abnormality detection server 400. The failure location estimation server 100, the monitoring target system 200, the configuration management server 300, and the abnormality detection server 400 are connected to a network 50.

The failure location estimation server 100 estimates, based on alerts generated in the monitoring target system 200 during a predetermined period, a node that is the cause of the alerts, that is, a failure location, and presents the estimated node to a user. Specifically, with respect to the alerts generated in the monitoring target system 200, the failure location estimation server 100 evaluates a failure score for each node in the monitoring target system 200, the failure score being an index indicating the degree of contribution of the node to the alerts. For example, the higher the failure score of a node, the higher the degree of contribution of the node to the alerts. That is, a higher failure score of a node indicates a higher likelihood that the node is the cause of the alerts. The failure location estimation server 100 identifies a node that is the root cause of the alerts, based on the failure scores of the nodes. The failure location estimation server 100 is an example of the information processing apparatus 10 of the first embodiment.

The monitoring target system 200 is a system to be monitored by the failure location estimation server 100, the configuration management server 300, and the abnormality detection server 400. The monitoring target system 200 includes a plurality of nodes such as communication devices, physical machines, virtual machines, and applications. The applications may be executed as containers. The monitoring target system 200 is an example of the information processing system 20 of the first embodiment.

The configuration management server 300 collects information on the plurality of nodes in the monitoring target system 200, generates configuration information indicating the inter-node connections, based on the collected information, and provides the configuration information to the failure location estimation server 100.

The abnormality detection server 400 collects alerts generated in the monitoring target system 200, and provides alert information indicating the collected alerts to the failure location estimation server 100. An alert is a message for reporting an abnormal event due to the influence of a failure. For example, each node detects, as an abnormal event, an event in which a CPU usage rate, a memory usage rate, or the like exceeds a threshold or an event detected by anomaly detection, and generates an alert.

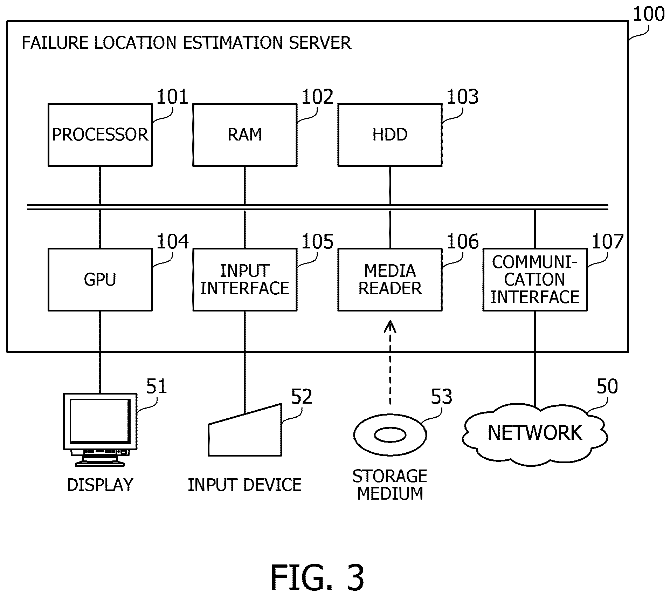

FIG. 3 illustrates an example of hardware of the failure location estimation server.

The failure location estimation server 100 includes a processor 101, a RAM 102, an HDD 103, a GPU 104, an input interface 105, a media reader 106, and a communication interface 107. These units included in the failure location estimation server 100 are connected to a bus inside the failure location estimation server 100. The processor 101 corresponds to the processing unit 12 of the first embodiment. The RAM 102 or the HDD 103 corresponds to the storage unit 11 of the first embodiment.

The processor 101 is an arithmetic device that executes program instructions. The processor 101 is, for example, a CPU. The processor 101 loads at least part of a program and data stored in the HDD 103 into the RAM 102 and executes the program. The processor 101 may include a plurality of processor cores. The failure location estimation server 100 may include a plurality of processors. The processes described below may be performed in parallel using a plurality of processors or processor cores. A set of a plurality of processors may be referred to as a "multiprocessor" or simply as a "processor".

The RAM 102 is a volatile semiconductor memory that temporarily stores programs to be executed by the processor 101 and data to be used by the processor 101 during processing. The failure location estimation server 100 may include a memory of a type other than RAM, or may include a plurality of memories.

The HDD 103 is a non-volatile storage device that stores software programs such as an operating system (OS), middleware, and application software, and data. The failure location estimation server 100 may include another type of storage device such as a flash memory or a solid state drive (SSD), or may include a plurality of non-volatile storage devices.

The GPU 104 outputs images to a display 51 connected to the failure location estimation server 100 in accordance with instructions from the processor 101. The display 51 may be any type of display such as a cathode ray tube (CRT) display, a liquid crystal display (LCD), a plasma display, or an organic electro-luminescence (OEL) display.

The input interface 105 acquires input signals from an input device 52 connected to the failure location estimation server 100 and outputs the input signals to the processor 101. As the input device 52, a pointing device such as a mouse, a touch panel, a touch pad, or a trackball, a keyboard, a remote controller, a button switch, or the like may be used. A plurality of types of input devices may be connected to the failure location estimation server 100.

The media reader 106 is a reading device that reads programs and data recorded in a storage medium 53. As the storage medium 53, for example, a magnetic disk, an optical disc, a magneto-optical disk (MO), a semiconductor memory, or the like may be used. Magnetic disks include a flexible disk (FD) and an HDD. Optical discs include a compact disc (CD) and a digital versatile disc (DVD).

For example, the media reader 106 copies a program or data read from the storage medium 53 to another storage medium such as the RAM 102 or the HDD 103. The read program is executed by, for example, the processor 101. The storage medium 53 may be a portable storage medium, and may be used to distribute programs and data. The storage medium 53 and the HDD 103 may be referred to as computer-readable storage media.

The communication interface 107 is connected to the network 50 and communicates with other information processing apparatuses via the network 50. The communication interface 107 may be a wired communication interface connected to a wired communication device such as a switch or a router, or may be a wireless communication interface connected to a wireless communication device such as a base station or an access point.

Physical machines included in the monitoring target system 200, the configuration management server 300, and the abnormality detection server 400 are also implemented with hardware similar to that of the failure location estimation server 100.

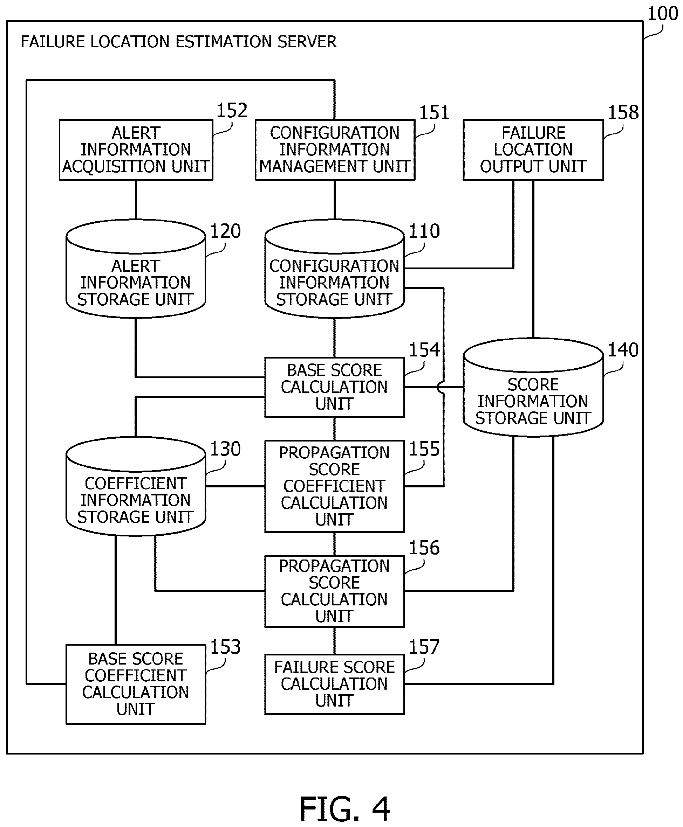

FIG. 4 illustrates an example of functions of the failure location estimation server.

The failure location estimation server 100 includes a configuration information storage unit 110, an alert information storage unit 120, a coefficient information storage unit 130, a score information storage unit 140, a configuration information management unit 151, an alert information acquisition unit 152, a base score coefficient calculation unit 153, a base score calculation unit 154, a propagation score coefficient calculation unit 155, a propagation score calculation unit 156, a failure score calculation unit 157, and a failure location output unit 158. A storage space of the RAM 102 or the HDD 103 is used for the configuration information storage unit 110, the alert information storage unit 120, the coefficient information storage unit 130, and the score information storage unit 140. The configuration information management unit 151, the alert information acquisition unit 152, the base score coefficient calculation unit 153, the base score calculation unit 154, the propagation score coefficient calculation unit 155, the propagation score calculation unit 156, the failure score calculation unit 157, and the failure location output unit 158 are implemented by the processor 101 executing a program stored in the RAM 102.

The configuration information storage unit 110 stores configuration information including nodes in the monitoring target system 200 and inter-node connections.

The alert information storage unit 120 stores alert information in the monitoring target system 200.

The coefficient information storage unit 130 stores coefficient information indicating base score coefficients that are used for calculating base scores and propagation score coefficients that are used for calculating propagation scores.

The score information storage unit 140 stores score information indicating the base scores, the propagation scores, and the failure scores calculated for the nodes.

The configuration information management unit 151 acquires configuration information from the configuration management server 300 and stores the configuration information in the configuration information storage unit 110. The configuration information includes information on the nodes included in the monitoring target system 200 and information indicating the connections between the nodes including the caller-callee relationship between the nodes. In addition, the configuration information includes information indicating the amount of resources allocated from another node to a certain node. For example, the configuration information includes information indicating the amount of resources allocated from a virtual machine to a certain application, the amount of resources allocated from a physical machine to a virtual machine, and others.

The alert information acquisition unit 152 acquires alert information from the abnormality detection server 400 and stores the alert information in the alert information storage unit 120.

The base score coefficient calculation unit 153 calculates a base score coefficient for each node, based on the configuration information stored in the configuration information storage unit 110, and stores the calculated base score coefficients in the coefficient information storage unit 130. The base score coefficient for a node is used for calculating the base score of the node. The base score coefficient is determined based on the caller-callee relationship between the nodes within the same layer and the hierarchical relationship across different layers.

The base score calculation unit 154 calculates a base score for each node, based on the configuration information stored in the configuration information storage unit 110, the alert information stored in the alert information storage unit 120, and the coefficient information stored in the coefficient information storage unit 130. The base score calculation unit 154 stores the calculated base scores in the score information storage unit 140. For example, the base score is calculated by (Base score coefficient) × {Σᵢ(Abnormality level i) × (The number of alerts with abnormality level i generated in the corresponding node)}. Here, the score calculated by {Σᵢ (Abnormality level i) × (The number of alerts with abnormality level i generated in the corresponding node)} is referred to as a self-score. That is, the base score is calculated as the product of the base score coefficient and the self-score. The self-score may be the total number of alerts generated in the node.

The propagation score coefficient calculation unit 155 calculates a propagation score coefficient of an adjacent node toward a certain node, based on the configuration information stored in the configuration information storage unit 110, and stores the propagation score coefficient in the coefficient information storage unit 130. The propagation score coefficient is used for calculating a propagation score of the adjacent node toward the certain node. The propagation score coefficient is determined based on the dependency relationship between the node and the adjacent node.

The propagation score calculation unit 156 calculates a propagation score of an adjacent node toward a certain node, based on the coefficient information stored in the coefficient information storage unit 130 and the score information stored in the score information storage unit 140. A propagation score is calculated for each pair of a node of interest and its adjacent node. The propagation score calculation unit 156 stores the calculated propagation scores in the score information storage unit 140.

The failure score calculation unit 157 calculates a failure score for each node, based on the base score of the node stored in the score information storage unit 140 and the propagation scores of the adjacent nodes toward the node, and stores the failure scores in the score information storage unit 140.

The failure location output unit 158 identifies a node corresponding to a failure location, based on the failure scores of the nodes stored in the score information storage unit 140, and outputs information on the node. Specifically, the failure location output unit 158 determines that a node having the highest failure score is the node corresponding to the failure location.

For example, the failure location output unit 158 visualizes a node that is the cause of alerts, that is, the node corresponding to the failure location, based on the configuration information stored in the configuration information storage unit 110 and the failure score information of the nodes stored in the score information storage unit 140. Specifically, the failure location output unit 158 displays a failure location estimation result screen on the display 51. The failure location estimation result screen displays a result of estimating the failure location. For example, the failure location estimation result screen displays each node in the monitoring target system 200, information indicating the connections between the nodes, and the calculation result of the failure score of each node while highlighting the node identified as the failure location.

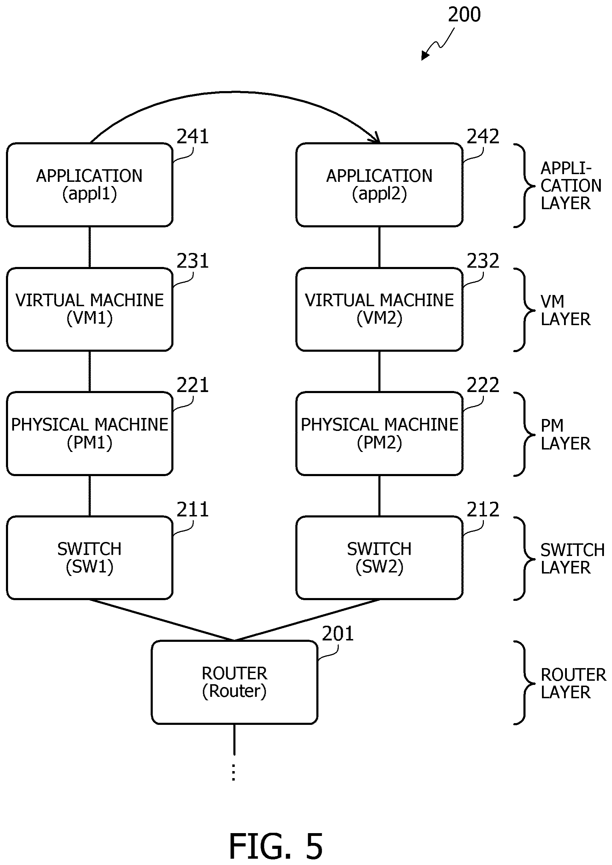

FIG. 5 illustrates an example of the monitoring target system.

The monitoring target system 200 includes, for example, a router 201, switches 211 and 212, physical machines 221 and 222, virtual machines 231 and 232, and applications 241 and 242.

The switches 211 and 212 are connected to the router 201. The switches 211 and 212 are, for example, L2 switches. Access from the switch 211 to a higher-level network is made via the router 201. Therefore, the switch 211 depends on the router 201. The router 201 is depended upon by the switch 211. Similarly, the switch 212 depends on the router 201. The router 201 is depended upon by the switch 212.

The physical machine 221 is connected to the switch 211. Communication between the physical machine 221 and another physical machine is performed via the switch 211. Therefore, the physical machine 221 depends on the switch 211. The switch 211 is depended upon by the physical machine 221. The physical machine 222 is connected to the switch 212. The physical machine 222 depends on the switch 212. The switch 212 is depended upon by the physical machine 222.

The virtual machine 231 is executed by the physical machine 221. Therefore, the virtual machine 231 depends on the physical machine 221. The physical machine 221 is depended upon by the virtual machine 231. The virtual machine 232 is executed by the physical machine 222. Therefore, the virtual machine 232 depends on the physical machine 222. The physical machine 222 is depended upon by the virtual machine 232.

The application 241 is executed by the virtual machine 231. Therefore, the application 241 depends on the virtual machine 231. The virtual machine 231 is depended upon by the application 241. The application 242 is executed by the virtual machine 232. Thus, the application 242 depends on the virtual machine 232. The virtual machine 232 is depended upon by the application 242.

The application 241 cooperates with the application 242. For example, the application 241 calls the application 242 to request processing. More specifically, the application 241 transmits a request to the application 242 and executes processing according to a response from the application 242. Therefore, the application 241 depends on the application 242. The application 242 is depended upon by the application 241.

The above inter-node connections are represented by, for example, a graph in which a dependent node is connected to its depended-on node with an edge. The dependent node, which depends on another node, is taken as an upper node, and the depended-on node, which is depended upon by another node, is taken as a lower node. That is, in the example of FIG. 5, the applications 241 and 242 are nodes in the uppermost layer. The router 201 is a node in the lowermost layer.

The layer to which the applications 241 and 242 belong is an application layer. The layer to which the virtual machines 231 and 232 belong is a virtual machine (VM) layer. The layer to which the physical machines 221 and 222 belong is a physical machine (PM) layer. The layer to which the switches 211 and 212 belong is a switch layer. The layer to which the router 201 belongs is a router layer.

Here, the node name of the router 201 is "Router". The node name of the switch 211 is "SW1". The node name of the switch 212 is "SW2". The node name of the physical machine 221 is "PM1". The node name of the physical machine 222 is "PM2". The node name of the virtual machine 231 is "VM1". The node name of the virtual machine 232 is "VM2". The node name of the application 241 is "appl1". The node name of the application 242 is "appl2".

A failure occurring in a depended-on node often affects its dependent node, but a failure occurring in the dependent node may cause the depended-on node to generate an alert. For example, if the memory of the physical machine 221 is overloaded, the virtual machine 231 is also overloaded and thus generates an alert. On the other hand, if the virtual machine 231 executes a large number of jobs without limitation, the physical machine 221 may delay its service and thus generate an alert.

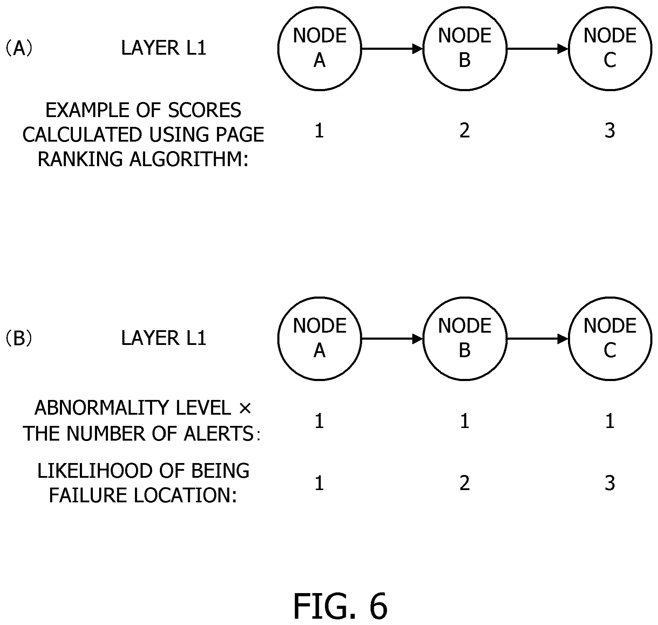

FIG. 6 illustrates an example of calculating a base score coefficient for each node within the same layer.

In the drawing, arrows connecting nodes represent directed edges. A directed edge represents the dependency relationship between nodes. The node at the start point of a directed edge depends on the node at the end point thereof. The node at the end point of a directed edge is depended upon by the node at the start point thereof.

FIG. 6(A) illustrates scores calculated using PageRank, which is a Web page ranking algorithm, for three nodes A, B, and C belonging to the same layer. The nodes A, B, and C all belong to the layer L1. Here, the node A calls the node B. The node B calls the node C. The caller-callee relationship may be replaced with link relationship between the nodes. That is, the node A has a link to the node B. The node B has a link to the node C.

PageRank ranks each Web page according to, for example, the link relationship based on the hyperlinks of the Web pages. More specifically, PageRank ranks each Web page based on the backlink and the forwardlink of the Web page. A backlink of a Web page is a link that points from another Web page to the Web page. A forwardlink of a Web page is a link that points from the Web page to another Web page. In PageRank, a Web page linked from many Web pages is evaluated as important. In addition, a Web page linked from an important Web page is also evaluated as important. For example, the link relationship between Web pages may be represented by an adjacency matrix. Then, the ranking by PageRank reduces to a problem of obtaining an eigenvector of an adjacency matrix (or a predetermined matrix obtained by adjusting the adjacency matrix). An eigenvector of a matrix may be calculated using, for example, the power method.

The scores of the nodes A, B, and C are calculated by applying the caller-callee relationship between the nodes A, B, and C to the above-described PageRank method. The dependency relationship indicated in the caller-callee relationship corresponds to the directions of the links in PageRank, and the ranking of the scores is also the same. For example, it is assumed that the score of the node A calculated based on PageRank is 1, the score of the node B is 2, and the score of the node C is 3. In this way, in the example of the nodes A, B, and C, the node C corresponding to the page that is the end of the links is evaluated as the most important. Note that, in the example of FIG. 6, nodes other than the nodes A, B, and C belonging to the layer L1 are omitted.

The base score coefficient calculation unit 153 uses the scores calculated by PageRank as base score coefficients. PageRank is described as a calculation method in which the base score coefficient for a first node belonging to a certain layer increases as the base score coefficients for one or more caller nodes, which belong to the certain layer and call the first node, increase. For example, let L denote the base score coefficient of the node n1 and M denote the number of callee nodes that the node n1 calls. The influence L/M of the base score coefficient of the node n1 is added to the base score coefficient of one callee node n2. The base score coefficient of the node n2 is calculated as the sum of the influences of the base score coefficients from the caller nodes including the node n1. In the case where the node n2 has callee nodes, the influence of the base score coefficient of the node n2 is distributed among the callee nodes according to the number of callee nodes the node n2 calls. The base score coefficient may be said to be an index indicating the likelihood of being a failure location.

FIG. 6(B) illustrates (abnormality level) × (the number of alerts) (= self-score), and the likelihood of being a failure location (= base score) with respect to each of the nodes A, B, and C. For example, even in the case where the self-scores of the nodes A, B, and C are all equal to 1, a base score, which is obtained by weighting a self-score by a base score coefficient, is obtained for each node by multiplying the self-score of the node by the base score coefficient of the node.

As illustrated in FIG. 6, the base score coefficients calculated from the caller-callee relationship within the same layer are referred to as "base score coefficients in the horizontal direction" for convenience.

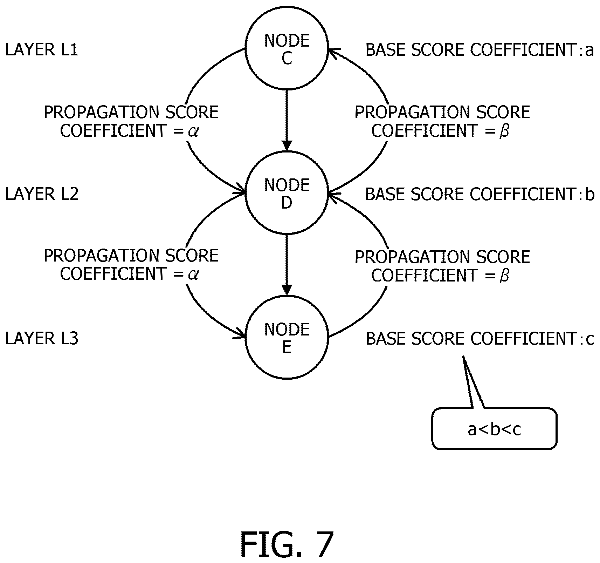

FIG. 7 illustrates an example of the magnitude relationship among the base score coefficients of nodes in different layers.

Nodes C, D, and E belong to different layers. The node C belongs to the layer L1. The node D belongs to the layer L2 that is one layer below the node C. The node E belongs to the layer L3 that is one layer below the node D. The node C depends on the node D. The node D depends on the node E.

The base score coefficient calculation unit 153 determines a base score coefficient for each node in different layers, according to which layer the node belongs to. For example, the base score coefficient for the node C is a. The base score coefficient for the node D is b. The base score coefficient for the node E is c. The base score coefficient calculation unit 153 increases a base score coefficient for a node as the node belongs to a lower layer. That is, a < b < c. The values of a, b, and c are determined in advance.

FIG. 7 also illustrates propagation score coefficients. For example, the propagation score coefficient of the node C toward the node D and the propagation score coefficient of the node D toward the node E are α. The propagation score coefficient of the node D toward the node C and the propagation score coefficient of the node E toward the node D are β. Both α and β are positive real numbers. Here, α > β.

Here, as illustrated in FIG. 7, the base score coefficients calculated from the hierarchical relationship across different layers, that is, from the infrastructure dependency relationship in the vertical direction are referred to as "base score coefficients in the vertical direction" for convenience. The base score coefficient calculation unit 153 integrates "base score coefficients in the vertical direction" and "base score coefficients in the horizontal direction" as follows.

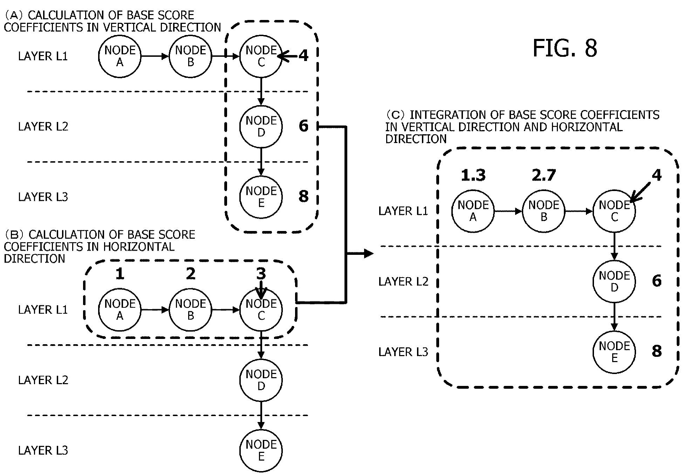

FIG. 8 illustrates an example of integrating base score coefficients in the vertical direction and the horizontal direction.

In FIG. 8, (A) illustrates "base score coefficients in the vertical direction" calculated for the nodes C, D, and E. It is assumed that the "base score coefficients in the vertical direction" of the nodes C, D, and E are 4, 6, and 8, respectively.

In FIG. 8, (B) illustrates "base score coefficients in the horizontal direction" calculated for the nodes A, B, and C. It is assumed that the "base score coefficients in the horizontal direction" of the nodes A, B, and C are 1, 2, and 3, respectively.

The base score coefficient calculation unit 153 normalizes the base score coefficient of each node in the layer for which the "base score coefficients in the horizontal direction" are obtained so that the maximum value of the "base score coefficients in the horizontal direction" matches the "base score coefficient in the vertical direction".

In FIG. 8, (C) illustrates a result of integrating the base score coefficients in the vertical direction and the horizontal direction illustrated in (A) and (B) of FIG. 8. The maximum value of the "base score coefficients in the horizontal direction" of the layer L1 is 3 of the node C. The "base score coefficient in the vertical direction" of the node C is 4. In this case, the base score coefficient calculation unit 153 normalizes the base score coefficient of each node in the layer L1 by multiplying the "base score coefficient in the horizontal direction" of each node in the layer L1 by 4/3. Specifically, the base score coefficient of the node A after the normalization is calculated as 1 × 4/3 ≈ 1.3. The base score coefficient of the node B after the normalization is calculated as 2 × 4/3 ≈ 2.7. The base score coefficient of the node C after the normalization is calculated as 3 × 4/3 = 4. The base score coefficient calculation unit 153 determines that the base score coefficient of the node D is 6. The base score coefficient calculation unit 153 also determines that the base score coefficient of the node E is 8. In the example of FIG. 8, it is assumed that, with respect to the layers L2 and L3, calls between the nodes within the same layer do not occur. However, such calls between nodes within the same layer may also occur in the layers L2 and L3. Also in this case, the base score coefficient calculation unit 153 normalizes the "base score coefficients in the horizontal direction" in a layer as in the case of the layer L1.

As described above, the base score coefficient calculation unit 153 calculates the base score coefficients in the vertical direction and the horizontal direction for the nodes constituting the entire system, and integrates these base score coefficients to obtain the final base score coefficient for each node. The base score coefficient calculation unit 153 calculates the base score coefficient for each node in the entire system every time the system configuration changes, thereby adjusting the base score coefficients to the latest system configuration.

Note that the above integration example is an example, and the base score coefficient calculation unit 153 may obtain the base score coefficient for each node with another method. For example, the base score coefficient calculation unit 153 may normalize the "base score coefficients in the vertical direction" so that the maximum value of the "base score coefficients in the vertical direction" matches the maximum value of the "base score coefficients in the horizontal direction" obtained in the layer L1.

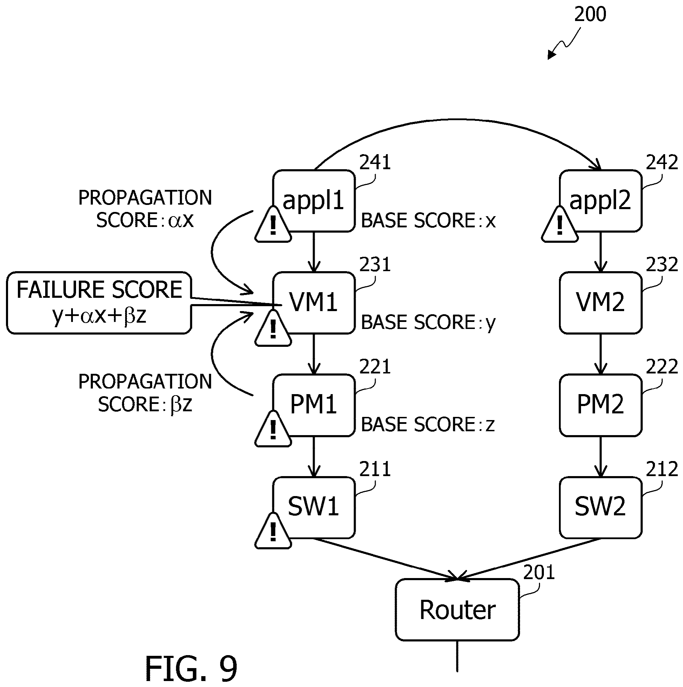

FIG. 9 illustrates an example of a method of calculating a failure score.

In this example, the predetermined number of edges k for determining adjacent nodes is set to 1. In the case where the number of edges separating two nodes is one, it is determined that these two nodes are adjacent to each other. More specifically, in the case where the number of directed edges separating the node N1 and the node N2 is one, that is, in the case where the nodes N1 and N2 are directly connected to each other by a directed edge, the node N2 is an adjacent node to the node N1, and the node N1 is an adjacent node to the node N2.

For example, the failure location estimation server 100 calculates a failure score for the virtual machine 231 with respect to alerts generated in the switch 211, the physical machine 221, the virtual machine 231, and the applications 241 and 242 as follows. The adjacent nodes to the virtual machine 231 are the application 241 and the physical machine 221.

First, the base score calculation unit 154 calculates a base score for each node in the monitoring target system 200. The base score of the application 241 is x. The base score of the virtual machine 231 is y. The base score of the physical machine 221 is z. In FIG. 9, the illustration of the base scores of the nodes other than the virtual machine 231 in question and the adjacent nodes to the virtual machine 231 is omitted.

More specifically, the base score calculation unit 154 obtains a base score for a node by weighting according to the abnormality levels (ERROR, Warning, Information, or the like) of alerts. For example, the base score calculation unit 154 quantifies weights for the abnormality levels of the alerts as ERROR: 3, Warning: 2, and Information: 1. For example, in the case where the number of alerts is 12 for ERROR, 11 for Warning, and 13 for Information, the base score calculation unit 154 calculates the self-score of the node in question as 3 * 12 + 2 * 11 + 1 * 13 = 71. However, as described above, the base score calculation unit 154 may use the number of alerts issued by the node as the self-score. For example, in the case where the number of alerts issued by the node is 12, the self-score of the node may be 12.

The base score calculation unit 154 obtains the base score y for the virtual machine 231 by multiplying the self-score obtained according to the alerts for the virtual machine 231 by the base score coefficient of the virtual machine 231. The base score calculation unit 154 calculates the base score x for the application 241 and the base score z for the physical machine 221 in the same way.

The propagation score coefficient of the application 241 toward the virtual machine 231 is α. The propagation score coefficient of the physical machine 221 toward the virtual machine 231 is β.

The propagation score calculation unit 156 calculates the propagation score of an adjacent node toward a node by multiplying the base score of the adjacent node by the propagation score coefficient of the adjacent node toward the node. That is, the propagation score calculation unit 156 calculates the propagation score αx of the application 241 toward the virtual machine 231. The propagation score calculation unit 156 calculates the propagation score βz of the physical machine 221 toward the virtual machine 231.

The failure score calculation unit 157 calculates the sum of the base score of a node and the propagation scores of its adjacent nodes as the failure score of the node. For example, the failure score calculation unit 157 calculates a failure score for the virtual machine 231 as follows: Failure score = Base score (y) + Propagation score (αx) of adjacent upper layer + Propagation score (βz) of adjacent lower layer = y + αx + βz.

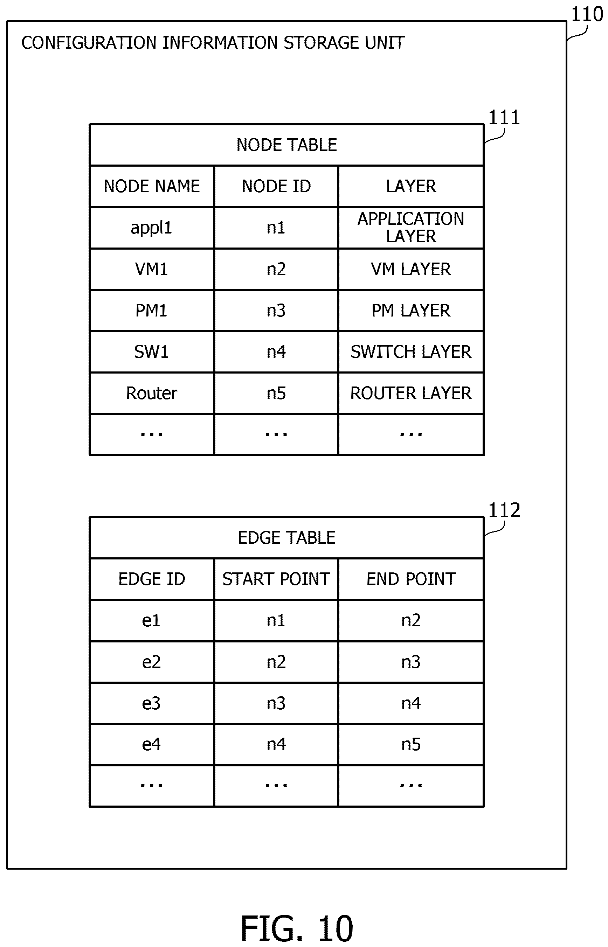

FIG. 10 illustrates an example of a node table and an edge table.

A node table 111 includes the following fields: Node Name, Node ID, and Layer. The Node Name field contains the node name of a node. The Node ID field contains a node ID. The Layer field contains a layer to which the node belongs. For example, the node table 111 has a record with Node Name of "appl1", Node ID of "n1", and Layer of "application layer". This record indicates that the node with the node name "appl1", that is, the application 241 has the node ID "n1" and belongs to the "application layer". The node table 111 also has records with node names and node IDs of nodes other than the application 241. Note that information on the hierarchical relationship of each layer is held in advance in the configuration information storage unit 110.

An edge table 112 includes the following fields: Edge ID, Start Point, and End Point. The Edge ID field contains an edge ID. The Start Point field contains the node ID of the node at the start point of the edge. The End Point field contains the node ID of the node at the end point of the edge. For example, the edge table 112 has a record with Edge ID of "e1", Start Point of "n1", and End Point of "n2". This record indicates that the node ID of the node at the start point of the edge identified by the edge ID "e1" is "n1", and the node ID of the node at the end point of the edge is "n2". That is, the record indicates that an adjacent node to the application 241 is the virtual machine 231 and that an adjacent node to the virtual machine 231 is the application 241. In addition, the record indicates the dependency relationship in which the application 241 depends on the virtual machine 231. This dependency relationship may be said to indicate that the virtual machine 231 is depended upon by the application 241. The edge table 112 also has records indicating edges with edge IDs other than the edge ID "e1". The information on an edge connecting nodes belonging to the same layer indicates the caller-callee relationship between the nodes belonging to the same layer.

The node table 111 and the edge table 112 are examples of the configuration information stored in the configuration information storage unit 110.

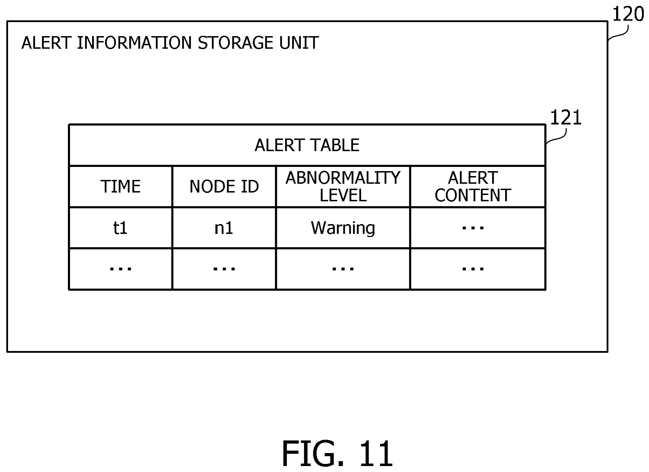

FIG. 11 illustrates an example of an alert table.

An alert table 121 includes the following fields: Time, Node ID, Abnormality Level, and Alert Content. The Time field contains a time of an alert having been generated. The Node ID field contains the node ID of the node in which the alert has been generated. The Abnormality Level field contains the abnormality level of the alert. For example, Abnormality levels of alerts include "ERROR", "Warning", and "Information". The Alert Content field contains an alert message. In this connection, as described above, the abnormality level of an alert is quantified such that the degree of abnormality increases as the abnormality level increases.

For example, the alert table 121 has a record with Time of "t1", Node ID of "n1", Abnormality Level of "Warning", and Alert Content of "...". This record indicates that an alert with the abnormality level "Warning" was generated at time t1 in the node with the node ID "n1", that is, the application 241. The alert table 121 also has records indicating other alerts. The alert table 121 is an example of the alert information stored in the alert information storage unit 120.

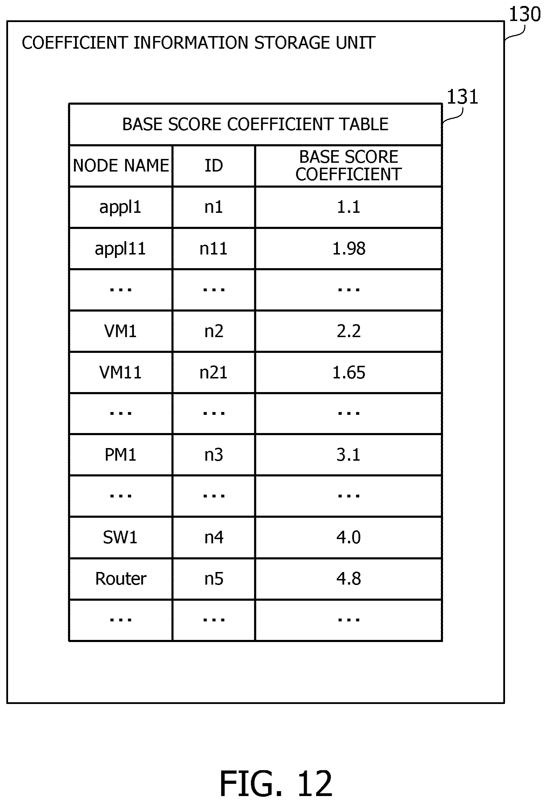

FIG. 12 illustrates an example of a base score coefficient table.

A base score coefficient table 131 is stored in the coefficient information storage unit 130. The base score coefficient table 131 includes the following fields: Node Name, ID, and Base Score Coefficient. The Node Name field contains a node name. The Node ID field contains a node ID. The Base Score Coefficient field contains a base score coefficient.

For example, the base score coefficient table 131 has a record with Node Name of "appl1", ID of "n1", and Base Score Coefficient of "1.1". This record indicates that the base score coefficient of the node with the node ID "n1" and the node name "appl1", that is, the application 241 is "1.1". The base score coefficient table 131 also has records indicating the base score coefficients of other nodes.

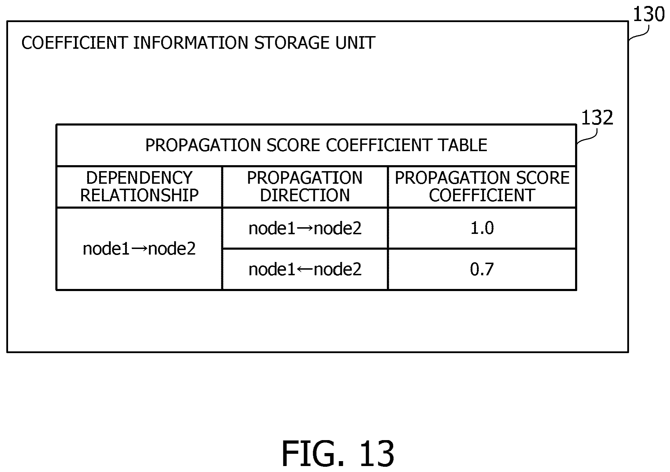

FIG. 13 illustrates an example of a propagation score coefficient table.

A propagation score coefficient table 132 is stored in the coefficient information storage unit 130. The propagation score coefficient table 132 includes the following fields: Dependency Relationship, Propagation Direction, and Propagation Score Coefficient. The Dependency Relationship field contains information indicating the dependency between nodes. The Propagation Direction field contains a direction to which the propagation score of an adjacent node is applied, that is, a propagation direction. The Propagation Score Coefficient field contains a propagation score coefficient corresponding to the propagation direction.

For example, in the propagation score coefficient table 132, the Dependency Relationship field contains information indicating that "node1" depends on "node2". The dependency relationship in which "node1" depends on "node2" in the example of FIG. 10 is represented as "node1 -> node2".

The propagation score coefficient table 132 has a record with Propagation Direction of "node1 -> node2" and Propagation Score Coefficient of "1.0" in association with Dependency Relationship of "node1 -> node2". This record indicates that, in the case where "node1" depends on "node2", the propagation score coefficient of "node1" toward "node2" is set to "1.0".

In addition, the propagation score coefficient table 132 has a record with Propagation Direction of "node1 <-node2" and Propagation Score Coefficient of "0.7" in association with Dependency Relationship of "node1 -> node2". This record indicates that, in the case where "node1" depends on "node2", the propagation score coefficient of "node2" toward "node1" is set to "0.7".

In the propagation score coefficient table 132, propagation score coefficients are set such that the propagation score coefficient α of a dependent node toward its depended-on node is higher than the propagation score coefficient β of the depended-on node toward the dependent node.

The base score coefficient table 131 and the propagation score coefficient table 132 are examples of the coefficient information stored in the coefficient information storage unit 130.

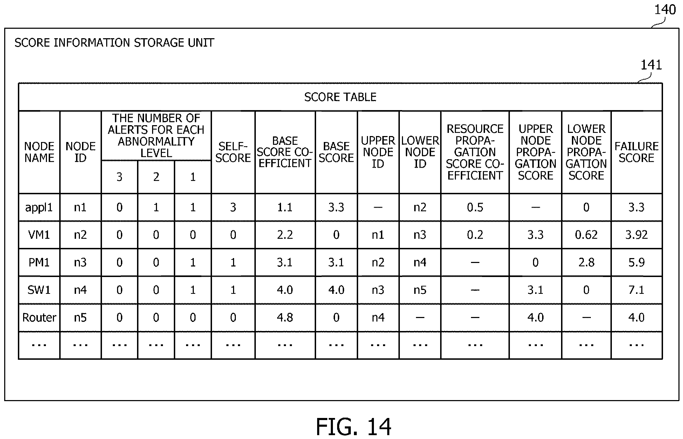

FIG. 14 illustrates an example of a score table.

A score table 141 is stored in the score information storage unit 140. The score table 141 includes the following fields: Node Name, Node ID, the Number of Alerts for Each Abnormality Level, Self-Score, Base Score Coefficient, Base Score, Upper Node ID, Lower Node ID, Resource Propagation Score Coefficient, Upper Node Propagation Score, Lower Node Propagation Score, and Failure Score.

The Node Name field contains a node name. The Node ID field contains a node ID. The Number of Alerts for Each Abnormality Level field contains the number of alerts for each abnormality level. For example, abnormality levels such as "ERROR", "Warning", and "Information" are associated with weight values such as abnormality level "3", abnormality level "2", and abnormality level "1", respectively. The Self-Score field contains the self-score of a corresponding node. The Base Score Coefficient field contains the base score coefficient of the corresponding node. The Base Score field contains the base score of the corresponding node. The Upper Node ID field contains the node ID of an upper node. The upper node is an adjacent node that is one layer above the corresponding node. The Lower Node ID field contains the node ID of a lower node. The lower node is an adjacent node that is one layer below the corresponding node.

The Resource Propagation Score Coefficient field contains a resource propagation score coefficient. The resource propagation score coefficient is a propagation score coefficient calculated by the propagation score coefficient calculation unit 155. In the case where the corresponding node uses resources of its lower node, the propagation score coefficient calculation unit 155 calculates the resource propagation score coefficient according to the ratio of the amount of resources used by the corresponding node relative to the amount of resources held by the lower node.

For example, the resource propagation score coefficient is calculated as the follows: Resource propagation score coefficient) = (Resource allocation coefficient) * {(The number of CPU cores used by the corresponding Node) / (The number of CPU cores held by the lower node)}. As described above, if the amount of CPU resources used by the corresponding node is large, the corresponding node is more likely to be affected by a failure occurring in the lower node, and therefore the resource propagation score coefficient increases. Note that a predetermined constant value is used as the resource allocation coefficient. In one example, the resource allocation coefficient is 1.0.

The score table 141 provides an example in which resource propagation score coefficients are registered in the score table 141. Alternatively, the propagation score coefficient calculation unit 155 may store the resource propagation score coefficient of an adjacent nodes (lower node) toward a node in the coefficient information storage unit 130.

The Upper Node Propagation Score field contains the propagation score of the upper node toward the corresponding node. The Lower Node Propagation Score field contains the propagation score of the lower node toward the corresponding node. The Failure Score field contains the failure score of the corresponding node.

For example, the score table 141 has a record with Node Name of "appl1", Node ID of "n1", and with respect to the Number of Alerts for Each Abnormality Level, the Number of Alerts of "0" for Abnormality Level 3, the Number of Alerts of "1" for Abnormality Level 2, and the Number of Alerts of "1" for Abnormality Level 1, Self-Score of "3", Base Score Coefficient of "1.1", Base Score of "3.3", Upper Node ID of "-", Lower Node ID of "n2", Resource Propagation Score Coefficient of "0.5", Upper Node Propagation Score of "-", Lower Node Propagation Score of "0", and Failure Score of "3.3". This record indicates the scores calculated for the application 241. Since there is no node above the application 241, no information is set in the Upper Node ID field and the Upper Node Propagation Score field.

Further, for example, the score table 141 has a record with Node Name of "VM1", Node ID of "n2", the Number of Alerts of "0" for each Abnormality Level, Self-Score of "0", Base Score Coefficient of "2.2", Base Score of "0", Upper Node ID of "n1", Lower Node ID of "n3", Resource Propagation Score Coefficient of "0.2", Upper Node Propagation Score of "3.3", Lower Node Propagation Score of "0.62", and Failure Score of "3.92". This record indicates the scores calculated for the virtual machine 231. Since the virtual machine 231 does not output any alert, the numbers of alerts for all abnormality levels, the self-score, and the base score are all "0". However, the failure score of the virtual machine 231 is "3.92" according to the propagation scores of the application 241 and the physical machine 221, which are the adjacent nodes to the virtual machine 231.

Further, for example, the score table 141 has a record with Node Name of "PM1", Node ID of "n3", and with respect to the Number of Alerts for Each Abnormality Level, the Number of Alerts of "0" for Abnormality Levels 3 and 2 and the Number of Alerts of "1" for Abnormality Level 1, Self-Score of "1", Base Score Coefficient of "3.1", Base Score of "3.1", Upper Node ID of "n2", Lower Node ID of "n4", Resource Propagation Score Coefficient of "-", Upper Node Propagation Score of "0", Lower Node Propagation Score of "2.8", and Failure Score of "5.9". This record indicates the scores calculated for the physical machine 221. Since the physical machine 221 is not allocated with any resources of its lower node, no information is set in the Resource Propagation Score Coefficient field. In the case where no information is set in the Resource Propagation Score Coefficient field, the propagation score coefficient corresponding to the propagation direction "node1 <- node2" in the propagation score coefficient table 132 is used as the propagation score coefficient of the lower node.

The score table 141 also has records indicating the base scores of nodes other than the application 241, the virtual machine 231, and the physical machine 221, the propagation scores of adjacent nodes toward the nodes, and the failure scores of the nodes. In this connection, the score table 141 is an example of the score information stored in the score information storage unit 140.

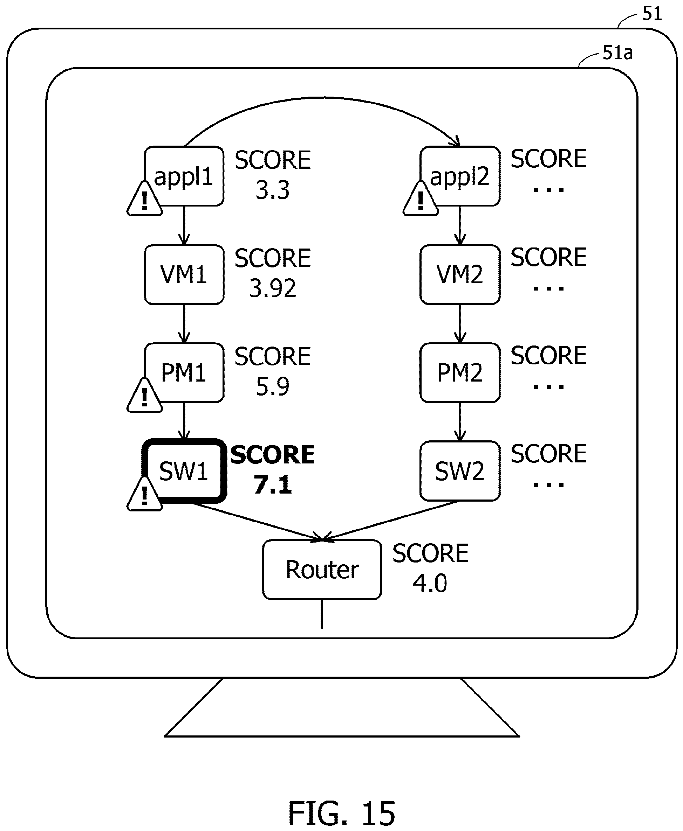

FIG. 15 illustrates a display example of a failure location estimation result screen.

A failure location estimation result screen 51a is displayed on the display 51. The failure location output unit 158 displays the failure location estimation result screen 51a on the display 51 on the basis of the node table 111, the edge table 112, the alert table 121, and the score table 141.

The failure location estimation result screen 51a includes an image indicating the connections between the nodes included in the monitoring target system 200. The failure location estimation result screen 51a also includes the failure score calculated for each node. In addition, the failure location estimation result screen 51a includes a mark indicating which node is a source of alerts considered at the time of calculating the failure scores. The example of the failure location estimation result screen 51a uses an exclamation mark "!" to indicate which node is a source of alerts.

Further, the failure location estimation result screen 51a highlights a node identified as the cause of the alerts, that is, a node identified as the failure location. In the example of the failure location estimation result screen 51a, an icon with the node name "SW1", that is, an icon indicating the switch 211 is highlighted as a node identified as a candidate for the root cause of the alerts. For example, the failure location output unit 158 may display a ranking (for example, first place: "SW1", second place: "PM1", ...) indicating the likelihood of being the cause of the alerts on the failure location estimation result screen 51a.

Note that the failure location estimation server 100 is also able to identify a node that is the cause of alerts from among nodes that have not issued the alerts.

Next, processing procedures of the failure location estimation server 100 will be described.

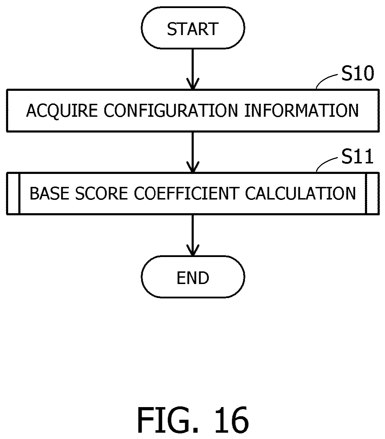

FIG. 16 is a flowchart illustrating an example of base score coefficient acquisition.

For example, the failure location estimation server 100 starts the following processing procedure when the configuration information is changed, at periodic timing, or in response to a request from a user.

(S10) The configuration information management unit 151 acquires the configuration information on the monitoring target system 200 from the configuration management server 300 and stores the configuration information in the configuration information storage unit 110. The configuration information includes the node table 111 and the edge table 112. Further, the configuration information includes information indicating the amount of resources allocated from another node to a certain node.

(S11) The base score coefficient calculation unit 153 calculates a base score coefficient for each node included in the monitoring target system 200 on the basis of the configuration information stored in the configuration information storage unit 110, and registers the base score coefficients in the base score coefficient table 131. The details of the base score coefficient calculation will be described later. Then, the base score coefficient acquisition ends.

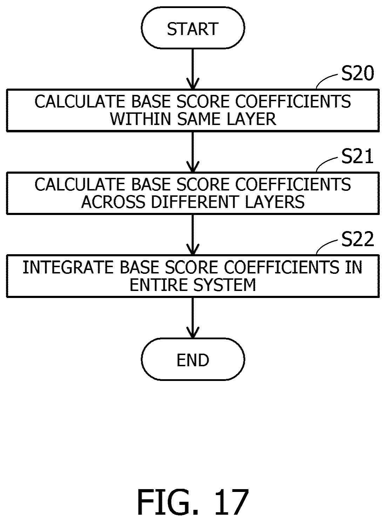

FIG. 17 is a flowchart illustrating an example of the base score coefficient calculation.

The base score coefficient calculation corresponds to step S11.

(S20) The base score coefficient calculation unit 153 calculates a base score coefficient for each node within the same layer, on the basis of the caller-callee relationship between the nodes within the same layer, which are determined from the configuration information. The base score coefficients calculated in step S20 correspond to the "base score coefficients in the horizontal direction" illustrated in FIGS. 6 and 8.

(S21) The base score coefficient calculation unit 153 calculates a base score coefficient for each node across different layers, on the basis of the dependency relationship between the nodes across the different layers, which are determined from the configuration information. The base score coefficients calculated in step S21 correspond to the "base score coefficients in the vertical direction" illustrated in FIGS. 7 and 8.

(S22) The base score coefficient calculation unit 153 integrates the base score coefficients in the entire system. That is, the base score coefficient calculation unit 153 integrates the "base score coefficients in the horizontal direction" calculated in step S20 and the "base score coefficients in the vertical direction" calculated in step S21 with the method illustrated in FIG. 8. The base score coefficient calculation unit 153 registers the integrated base score coefficient corresponding to each node in the base score coefficient table 131. Then, the base score coefficient calculation ends.

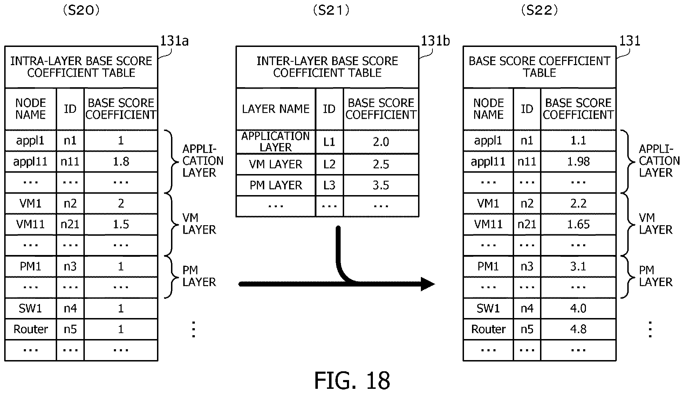

FIG. 18 illustrates a specific example of the base score coefficient calculation.

An intra-layer base score coefficient table 131a is a table that holds "base score coefficients in the horizontal direction" for each layer. The intra-layer base score coefficient table 131a is stored in the coefficient information storage unit 130. In step S20, the base score coefficient calculation unit 153 calculates, for each of the layers including the application layer, the VM layer, the PM layer, and others, the "base score coefficients in the horizontal direction" for the nodes belonging to the layer, and registers the "base score coefficients in the horizontal direction" in the intra-layer base score coefficient table 131a. For example, the intra-layer base score coefficient table 131a contains the "base score coefficient in the horizontal direction" (for example, "1") corresponding to a node name (for example, "appl1") and a node ID (for example, "n1").

An inter-layer base score coefficient table 131b is a table that holds "base score coefficients in the vertical direction" for different layers. The inter-layer base score coefficient table 131b is stored in the coefficient information storage unit 130. In step S21, the base score coefficient calculation unit 153 calculates the "base score coefficients in the vertical direction" for each of the layers including the application layer, the VM layer, the PM layer, and **...,** and registers the "base score coefficients in the vertical direction" in the inter-layer base score coefficient table 131b. The inter-layer base score coefficient table 131b contains the "base score coefficient in the vertical direction" (for example, "2.0") corresponding to a layer name (for example, "application layer") and a layer ID (for example, "L1"). In this connection, the base score coefficient registered for each layer in the inter-layer base score coefficient table 131b may be set in advance by the user.

Then, in step S22, the base score coefficient calculation unit 153 calculates the integrated base score coefficient for each node, based on the intra-layer base score coefficient table 131a and the inter-layer base score coefficient table 131b, and registers the integrated base score coefficients in the base score coefficient table 131.

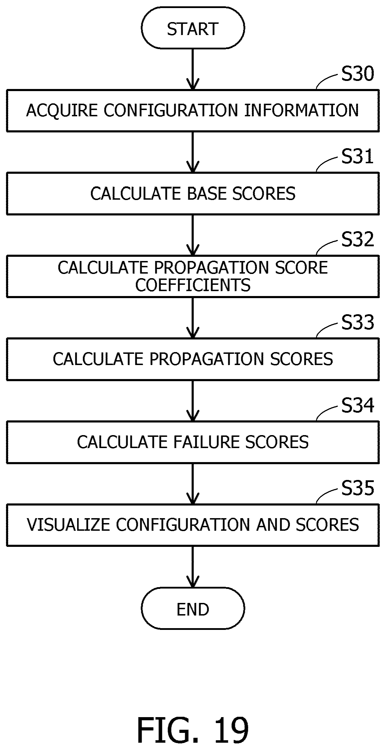

FIG. 19 is a flowchart illustrating an example of failure location estimation.

For example, the failure location estimation server 100 starts the following processing procedure at periodic timing, when an alert is detected, or in response to a request from a user. Among the coefficient information, coefficients such as the propagation score coefficients that have constant values may be preset by the user and stored in the coefficient information storage unit 130. On the other hand, coefficients such as the resource propagation score coefficients that may dynamically change according to the system configuration are calculated based on the latest configuration information in the following procedure.

(S30) The configuration information management unit 151 acquires configuration information on the monitoring target system 200 from the configuration management server 300 and stores the configuration information in the configuration information storage unit 110. The configuration information includes the node table 111 and the edge table 112. Further, the configuration information includes information indicating the amount of resources allocated from another node to a certain node.

(S31) The base score calculation unit 154 identifies nodes that have issued alerts on the basis of the alert table 121, calculates a base score for each node, and registers the base scores in the score table 141. For example, the base score calculation unit 154 calculates a self-score for each node by multiplying, for each abnormality level of alerts in the node, the number of alerts with the abnormality level by the abnormality level and summing the multiplication results. Further, the base score calculation unit 154 calculates a base score (= base score coefficient * self-score) for each node on the basis of the self-score of the node and the base score coefficient table 131, and registers the base scores in the score table 141. At this time, the base score calculation unit 154 registers the node name, the node ID, the upper node ID, and the lower node ID of each node in the score table 141 based on the node table 111 and the edge table 112.

(S32) The propagation score coefficient calculation unit 155 calculates a resource propagation score coefficient for each node on the basis of information indicating the amount of resources allocated from another node to the node, the information being included in the configuration information, and registers the resource propagation score coefficients in the score table 141. A node to which any resource is not allocated from another node is excluded from the calculation of the resource propagation score coefficient. Further, the propagation score coefficient calculation unit 155 may store the calculated resource propagation score coefficients in the coefficient information storage unit 130.

(S33) The propagation score calculation unit 156 calculates the propagation score of an upper node for each node by multiplying the base score of the upper node by the propagation score coefficient of the upper node, and registers the propagation scores of the upper nodes in the score table 141. The propagation score calculation unit 156 also calculates the propagation score of a lower node for each node by multiplying the base score of the lower node by the propagation score coefficient of the lower node, and registers the propagation scores of the lower nodes in the score table 141. Here, the propagation score calculation unit 156 calculates a propagation score for a node using the resources of its lower node, using a resource propagation score coefficient. On the other hand, the propagation score calculation unit 156 calculates a propagation score for a node having no resource propagation score coefficient, using a propagation score coefficient registered in the propagation score coefficient table 132.

(S34) The failure score calculation unit 157 calculates a failure score for each node as follows: Failure score = (Base score + Propagation score of upper node + Propagation score of lower node). The failure score calculation unit 157 registers the calculated failure scores in the score table 141.

(S35) The failure location output unit 158 visualizes the configuration of the monitoring target system 200 and the failure score of each node. Specifically, the failure location output unit 158 displays the failure location estimation result screen 51a on the display 51 on the basis of the node table 111, the edge table 112, and the score table 141. Then, the process of the failure location estimation server 100 ends.

For example, in the case where the above-described processing procedure is started at the time of alert detection, the failure location estimation server 100 updates the failure score of each node every time an alert is detected within a predetermined period immediately after the first alert is detected. This is because a group of alerts generated within the predetermined period is likely to have a common cause. As the length of the predetermined period, a value suitable for the monitoring target system 200, such as 1 minute, 3 minutes, 5 minutes, or 10 minutes, is set in advance.

In the case where the above-described processing procedure is started at periodic timing, the failure location estimation server 100 calculates the failure score for each node based on the alert information accumulated in the alert information storage unit 120 from the previous timing to the current timing.

Further, in the case where it is clear that there is no change in the configuration information from the time when the previous configuration information is acquired to the current time, the failure location estimation server 100 may skip step S30 and execute step S31.

Next, a modified example of the propagation score coefficient table 132 stored in the coefficient information storage unit 130 will be described.

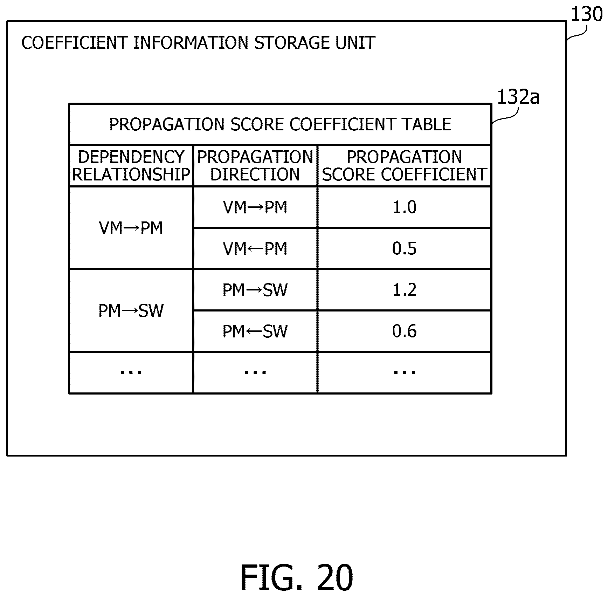

FIG. 20 illustrates a first modification of the propagation score coefficient table.

A propagation score coefficient table 132a is stored in the coefficient information storage unit 130 instead of the propagation score coefficient table 132 or together with the propagation score coefficient table 132. The propagation score coefficient table 132a includes the following fields: Dependency Relationship, Propagation Direction, and Propagation Score Coefficient. The propagation score coefficient table 132a is different from the propagation score coefficient table 132 in that attributes of nodes are included in the information set in the Dependency Relationship field and the Propagation Direction field. For example, the propagation score coefficient table 132a has a record indicating that the propagation score coefficient of a virtual machine (VM) toward a physical machine (PM) is 1.0 and the propagation score coefficient of the PM toward the VM is 0.5 in association with the dependency relationship in which the VM depends on the PM.

The propagation score coefficient table 132a also has records for propagation score coefficients in association with other dependency relationship, such as a propagation score coefficient in association with the dependency relationship in which a physical machine (PM) depends on a switch (SW).

The propagation score calculation unit 156 may calculate a propagation score for a pair of a node and its adjacent node, using a propagation score coefficient determined according to the node attribute of the node and the node attribute of the adjacent node, based on the propagation score coefficient table 132a.

Alternatively, both the propagation score coefficient tables 132 and 132a may be stored in the coefficient information storage unit 130. In this case, the propagation score calculation unit 156 may first make an attempt to acquire a propagation score coefficient from the propagation score coefficient table 132a for a pair of nodes. Then, if this attempt fails, the propagation score calculation unit 156 may use the propagation score coefficient table 132.

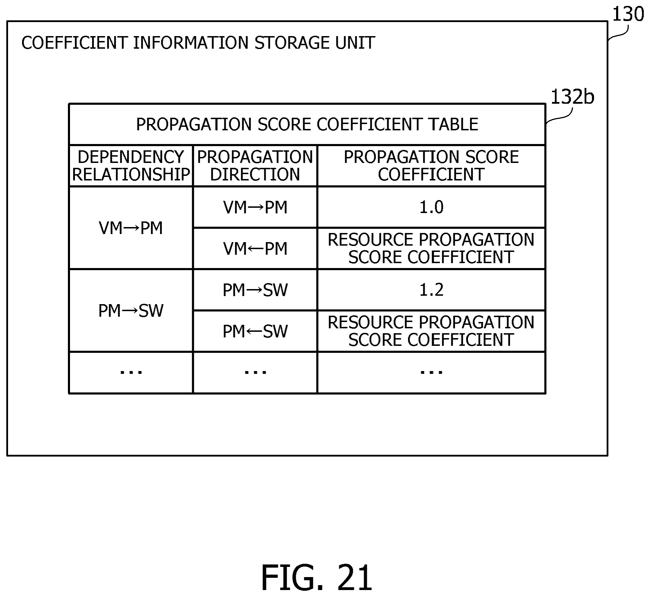

FIG. 21 illustrates a second modification of the propagation score coefficient table.

A propagation score coefficient table 132b is stored in the coefficient information storage unit 130 instead of the propagation score coefficient tables 132 and 132a or together with the propagation score coefficient table 132. The propagation score coefficient table 132b includes the following fields: Dependency Relationship, Propagation Direction, and Propagation Score Coefficient.

The propagation score coefficient table 132b is different from the propagation score coefficient table 132 in that attributes of nodes are included in the information set in the Dependency Relationship field and the Propagation Direction field. Further, the propagation score coefficient table 132b is different from the propagation score coefficient table 132a in that the propagation score coefficient of a depended-on node toward its dependent node indicates a resource propagation score coefficient. The resource propagation score coefficient is a value lower than the propagation score coefficient of the dependent node toward the depended-on node.

For example, the propagation score coefficient table 132b has a record indicating that the propagation score coefficient of the VM toward the PM is 1.0 and the propagation score coefficient of the PM toward the VM is a resource propagation score coefficient. The propagation score coefficient table 132b also has records for propagation score coefficients in association with other dependency relationship, such as a propagation score coefficient in association with the dependency relationship in which a physical machine (PM) depends on a switch (SW).

The propagation score calculation unit 156 may calculate a propagation score for each node, using a propagation score coefficient determined according to the node attribute of the node and the node attribute of its adjacent node, based on the propagation score coefficient table 132b. In this case, the propagation score coefficient calculation unit 155 calculates, for each node, a resource propagation score coefficient according to the node attribute of the node and the node attribute of the adjacent node.

Note that the resource propagation score coefficient is individually calculated for a pair of a node and its adjacent node. For example, in the case where the virtual machine 231 is constructed on the physical machine 221, the resource allocation coefficient is a constant value such as **1.0.** In the case where the number of CPU cores used by the virtual machine 231 is 2 and the number of CPU cores held by the physical machine 221 is 20, the resource propagation score coefficient of the physical machine 221 toward the virtual machine 231 is calculated as follows: Resource propagation score coefficient = Resource allocation coefficient (1.0) * {The number of CPU cores used by the corresponding node (2)} / {The number of CPU cores held by the lower node (20)} = 0.1. In this connection, the propagation score coefficient calculation unit 155 calculates the resource propagation score coefficient such that the resource propagation score coefficient is lower than the propagation score coefficient of the upper node toward the lower node.

In the above example, the predetermined number of edges k for determining an adjacent node is 1. However, as described above, k may be 2 or more. Next, an example of a method of calculating a failure score in the case of k = 2 will be described.

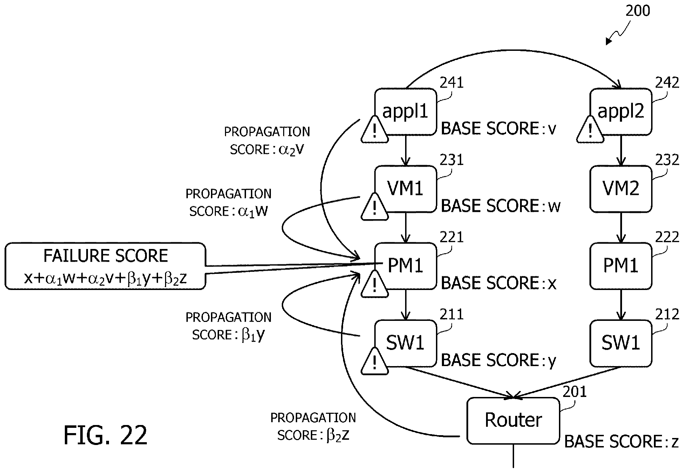

FIG. 22 illustrates an example of another method of calculating a failure score.

In the case of k = 2, nodes that are reachable within the number of edges 2, that is, within the number of hops 2 from a certain node are adjacent nodes. In this case, an adjacent node reachable by one edge is referred to as a first adjacent node. In addition, an adjacent node reachable by two edges is referred to as a second adjacent node. For example, with respect to the physical machine 221 in the monitoring target system 200, both the virtual machine 231 and the switch 211 are first adjacent nodes. In addition, with respect to the physical machine 221, both the application 241 and the router 201 are second adjacent nodes. The application 241 depends on the physical machine 221 via the virtual machine 231. The router 201 is depended upon by the physical machine 221 via the switch 211.

In this case, the failure score of the physical machine 221 is calculated using the base score v of the application 241, the base score w of the virtual machine 231, the base score x of the physical machine 221, the base score y of the switch 211, and the base score z of the router 201. That is, the failure score of the physical machine 221 is calculated as Failure score = x + α₁w + α₂v + β₁y + β₂z.

Here, α₁ is the propagation score coefficient of the virtual machine 231 toward the physical machine 221. α₂ is the propagation score coefficient of the application 241 toward the physical machine 221. β₁ is the propagation score coefficient of the switch 211 toward the physical machine 221. β₂ is the propagation score coefficient of the router 201 toward the physical machine 221. All of α₁, α₂, β₁, and β₂ are positive real numbers. Further, α₁ > α₂. α₁ > β₁. α₂ > β₂. β₁ > β₂. This is because a pair of strongly connected nodes having a small number of edges separating the nodes is estimated to have a greater degree of influence on each other than a pair of weakly connected nodes having a large number of edges separating the nodes.

In this way, the failure score calculation unit 157 may calculate the failure score for each node under the condition of k = 2. The failure score calculation unit 157 may calculate a failure score for each node under the condition of k = 3 or more in the same manner.

As described above, the failure location estimation server 100 is able to perform appropriate identification of a node that is the cause of alerts.

Here, in the monitoring target system 200, a large number of nodes operate in cooperation with each other. For this reason, when a failure occurs in the information processing system, the failure propagates and a large number of alerts are generated. Therefore, it is not easy to identify a node that is the root cause of the failure.

To deal with this, the failure location estimation server 100 calculates a failure score for each node by propagating the basic scores between adjacent nodes using the propagation score coefficients based on the dependency relationship between the node and its adjacent nodes. By doing so, the failure location estimation server 100 is able to appropriately identify a node that is the cause of alerts, based on the failure scores. In particular, the failure location estimation server 100 is able to incorporate the importance of each node within the same layer into the base score of the node, by weighting each node within the layer using the base score coefficients determined according to the caller-callee relationship between the nodes in the layer. By doing so, the failure location estimation server 100 is able to appropriately evaluate the base score of each node, which improves the estimation accuracy of a node that is the cause of the alerts.

For example, the failure location estimation server 100 is able to assist the user in smoothly identifying the location of the cause of a failure by outputting information on identified one or more nodes and presenting the information to the user via the failure location estimation result screen 51a. As a result, the failure location estimation server 100 is able to contribute to quick troubleshooting.

As described above, the failure location estimation server 100 performs the following process.

The configuration information storage unit 110 stores configuration information indicating the inter-node connections between a plurality of nodes included in the monitoring target system 200, each of the plurality of nodes belonging to any one of a plurality of layers in the monitoring target system 200. The alert information storage unit 120 stores alert information indicating alerts generated in the monitoring target system 200. The base score coefficient calculation unit 153 calculates a base score coefficient indicating a weight for each of the plurality of nodes, based on the caller-callee relationship between the nodes in the same layer, the caller-callee relationship being indicated in the configuration information. The base score calculation unit 154 calculates a base score for each of the plurality of nodes, based on the alert information and the base score coefficient, the base score being based on the alerts. The propagation score calculation unit 156 calculates, for each pair of a node and its adjacent node, a propagation score by multiplying the base score of the adjacent node to the node by a propagation score coefficient based on the dependency relationship between the node and the adjacent node. Here, the adjacent node is identified for each of the plurality of nodes on the basis of the configuration information. The failure score calculation unit 157 calculates, for each of the plurality of nodes, a failure score by summing the base score of the node and the propagation score corresponding to a pair of the node and its adjacent node. The failure location output unit 158 identifies one or more nodes that are candidates for the cause of the alerts among the plurality of nodes, on the basis of the failure scores of the plurality of nodes.

Accordingly, the failure location estimation server 100 is able to appropriately identify a node that is the cause of the alerts. In particular, the failure location estimation server 100 obtains the base score coefficient for each of the plurality of nodes on the basis of the caller-callee relationship between the nodes in the same layer, and calculates the failure score using the base score coefficients, thereby improving the accuracy of identifying the node that is the cause of the alerts based on the failure scores. Note that, as described above, the plurality of nodes may include communication devices such as switches and routers, physical machines, virtual machines, applications, and containers.

The alert information may indicate a plurality of alerts generated in the monitoring target system 200 during a predetermined period. In this case, the base score calculation unit 154 calculates base scores, which are respectively based on the plurality of alerts, for each of the plurality of nodes, based on the alert information.

For example, the base score coefficient calculation unit 153 calculates the base score coefficient for each of the plurality of nodes on the basis of the hierarchical relationship across the layers to which the plurality of nodes belong, in addition to the caller-callee relationship between the nodes in the same layer.

Accordingly, the failure location estimation server 100 is able to appropriately calculate the base score coefficient for each of the plurality of nodes, which further improves the accuracy of identifying the node that is the cause of the alerts.

In addition, the base score coefficient calculation unit 153 calculates the base score coefficient for each of nodes that belong to a first layer and include a first node, using a calculation method in which the base score coefficient for the first node increases as the base score coefficients for one or more caller nodes, which belong to the first layer and call the first node, increase.

Accordingly, the failure location estimation server 100 is able to appropriately calculate the base score coefficient for each of the plurality of nodes, which further improves the accuracy of identifying the node that is the cause of the alerts. For example, the base score coefficient calculation unit 153 may use PageRank as the calculation method.

In addition, in calculating the propagation score for a pair of a node and its adjacent node, the propagation score calculation unit 156 uses a first propagation score coefficient as the propagation score coefficient in the case where the adjacent node depends on the node. In the case where the node depends on the adjacent node, the propagation score calculation unit 156 uses a second propagation score coefficient lower than the first propagation score coefficient as the propagation score coefficient.

As a result, the failure location estimation server 100 is able to appropriately incorporate the influence of the adjacent node on the node into the failure score of the node, and is thus able to appropriately identify a node that is the cause of the alerts.

For example, in the case where the node depends on the adjacent node, the propagation score coefficient calculation unit 155 may increase the second propagation score coefficient as the ratio of the amount of resources allocated from the adjacent node to the node relative to the amount of the resources held by the adjacent node increases.

As a result, the failure location estimation server 100 is able to appropriately incorporate the influence of the depended-on node into the failure score of the dependent node, and thus is able to appropriately identify a node that is the cause of the alerts. The resource propagation score coefficient is an example of the second propagation score coefficient determined according to the amount of resources.

The propagation score calculation unit 156 may change the propagation score coefficient used for calculating the propagation score, according to the attribute of the node and the attribute of its adjacent node. As a result, the failure location estimation server 100 is able to appropriately incorporate the influence of the adjacent node on the node into the failure score of the node, and thus is able to appropriately identify a node that is the cause of alerts.

Further, the base score coefficient calculation unit 153 may calculate the base score for a node on the basis of the number of alerts output by the node. As a result, the failure location estimation server 100 is able to appropriately calculate the base score that is used for determining the failure score for each node, and is thus able to appropriately identify a node that is the cause of alerts.

In addition, the base score calculation unit 154 may calculate the base score for a node by multiplying, for each abnormality level of alerts output from the node, the number of alerts with the abnormality level by a weight corresponding to the abnormality level, summing the multiplication results, and multiplying the sum by the base score coefficient of the node. Accordingly, the failure location estimation server 100 is able to appropriately calculate the base score that is used for determining the failure score for each node, and is thus able to appropriately identify a node that is the cause of alerts.

Further, the propagation score calculation unit 156 may identify, as adjacent nodes to a node, a first adjacent node and a second adjacent node that is adjacent to the node via the first adjacent node. The propagation score calculation unit 156 may use, as the propagation score coefficient of the first adjacent node toward the node, a value higher than the propagation score coefficient of the second adjacent node toward the node.

As a result, the failure location estimation server 100 is able to appropriately incorporate the influence of the adjacent nodes on the node into the failure score of the node, and is thus able to improve the accuracy of identifying a node that is the cause of alerts.

The failure location output unit 158 may display, on a display device, a screen that highlights one or more nodes identified as candidates for the cause of alerts among the plurality of nodes. By doing so, the failure location estimation server 100 is able to assist the user in determining the node that is the cause of the alerts. As a result, the failure location estimation server 100 is able to support the user in quick troubleshooting. The display 51 is an example of the display device. However, the display device may be connected to another information processing apparatus that communicates with the failure location estimation server 100 via the network 50. For example, the failure location estimation server 100 may receive a request for failure location estimation from the other information processing apparatus, and in response to the request, returns information on a screen that highlights the first node, that is, a screen indicating a result of the failure location estimation, to the other information processing apparatus. The failure location estimation result screen 51a is an example of the screen that highlights the first node.

For example, the failure location output unit 158 may identify two or more nodes in descending order of the likelihood of being the cause of alerts, on the basis of the failure scores of the plurality of nodes, and output a ranking indicating the likelihood that each of the two or more nodes is the cause of the alerts.

Accordingly, the failure location estimation server 100 is able to assist the user in determining a node that is the cause of the alerts. As a result, the failure location estimation server 100 is able to support the user in quick troubleshooting.

The plurality of layers included in the monitoring target system 200 may include a layer of applications (application layer). The base score coefficient calculation unit 153 may calculate a base score coefficient for each of a plurality of nodes including a plurality of applications on the basis of the caller-callee relationship between the plurality of applications belonging to the application layer.

Accordingly, the failure location estimation server 100 is able to appropriately identify a node that is the cause of alerts. In particular, by obtaining a base score coefficient for each node on the basis of the caller-callee relationship between the applications in the application layer, the failure location estimation server 100 is able to appropriately calculate the failure scores using the base score coefficients, and is thus able to improve the accuracy of identifying the node that is the cause of the alerts.

The information processing of the first embodiment may be implemented by causing the processing unit 12 to execute a program. The information processing of the second embodiment may be implemented by causing the processor 101 to execute a program. The program may be recorded in the computer-readable storage medium 53**.**

For example, the program may be distributed by distributing the storage medium 53 on which the program is stored. Alternatively, the program may be stored in another computer and distributed via a network. For example, the computer may store (install) the program stored in the storage medium 53 or the program received from another computer in a storage device such as the RAM 102 or the HDD 103, read the program from the storage device, and execute the program.

### Reference Signs List

10 Information processing apparatus
11 Storage unit
11a, 11b Table
12 Processing unit
20 Information processing system

## Claims

1. An information processing apparatus comprising:
a storage unit for storing configuration information and alert information, the configuration information indicating inter-node connections between a plurality of nodes included in an information processing system, each of the plurality of nodes belonging to any one of a plurality of layers in the information processing system, the alert information indicating an alert generated in the information processing system; and
a processing unit for:
calculating a base score coefficient indicating a weight for each of the plurality of nodes, based on caller-callee relationship between nodes in a same layer, the caller-callee relationship being indicated in the configuration information;
calculating a base score for each of the plurality of nodes, based on the alert information and the base score coefficient, the base score being based on the alert;
calculating, for each of pairs, each of which includes a respective node of the plurality of nodes and an adjacent node adjacent to the respective node, a propagation score by multiplying the base score of the adjacent node by a propagation score coefficient based on dependency relationship between the respective node and the adjacent node, the adjacent node being identified for the respective node based on the configuration information;
calculating, for each node of the plurality of nodes, a failure score by summing the base score of said each node and the propagation score corresponding to a pair of said each node and an adjacent node adjacent to said each node; and
identifying one or more nodes that are candidates for a cause of the alert among the plurality of nodes, based on the failure scores of the plurality of nodes.

2. The information processing apparatus according to claim 1, wherein the processing unit calculates the base score coefficient for each of the plurality of nodes, based on hierarchical relationship across layers to which the plurality of nodes belong in addition to the caller-callee relationship between the nodes in the same layer.

3. The information processing apparatus according to claim 1 or 2, wherein the processing unit calculates the base score coefficient for each of nodes belonging to a first layer and including a first node, using a calculation method in which the base score coefficient for the first node increases as the base score coefficients for one or more caller nodes that belong to the first layer and call the first node increase.

4. The information processing apparatus according to claim 1, wherein, in calculating the propagation score, the processing unit
uses a first propagation score coefficient as the propagation score coefficient in a case where the adjacent node depends on the respective node, and
uses a second propagation score coefficient lower than the first propagation score coefficient as the propagation score coefficient in a case where the respective node depends on the adjacent node.

5. The information processing apparatus according to claim 4, wherein, in the case where the respective node depends on the adjacent node, the processing unit increases the second propagation score coefficient as a ratio of an amount of resources allocated from the adjacent node to the respective node relative to an amount of resources held by the adjacent node increases.

6. The information processing apparatus according to claim 1, wherein the processing unit changes the propagation score coefficient used for calculating the propagation score, according to an attribute of the respective node and an attribute of the adjacent node.

7. The information processing apparatus according to claim 1, wherein the processing unit calculates the base score for each node of the plurality of nodes, based on a number of alerts output by said each node.

8. The information processing apparatus according to claim 7, wherein the processing unit calculates the base score for said each node by multiplying, for each abnormality level of abnormality levels of the alerts output by said each node, a number of alerts with said each abnormality level by a weight corresponding to said each abnormality level, summing results of the multiplying, and multiplying a result of the summing by the base score coefficient of said each node.

9. The information processing apparatus according to claim 1, wherein the processing unit identifies, as the adjacent node adjacent to the respective node, a first adjacent node and a second adjacent node adjacent to the respective node via the first adjacent node, and uses, as the propagation score coefficient of the first adjacent node toward the respective node, a value higher than the propagation score coefficient of the second adjacent node toward the respective node.

10. The information processing apparatus according to claim 1, wherein the processing unit identifies two or more nodes in descending order of likelihood of being the cause of the alert, based on the failure scores of the plurality of nodes, and outputs a ranking indicating the likelihood that each of the two or more nodes is the cause of the alert.

11. The information processing apparatus according to claim 1,
wherein the plurality of layers include an application layer, and
wherein the processing unit calculates the base score coefficient for each of the plurality of nodes including a plurality of applications belonging to the application layer, based on caller-callee relationship between the plurality of applications.

12. An information processing method executed by a computer, the information processing method comprising:
acquiring configuration information and alert information, the configuration information indicating inter-node connections between a plurality of nodes included in an information processing system, each of the plurality of nodes belonging to any one of a plurality of layers in the information processing system, the alert information indicating an alert generated in the information processing system;
calculating a base score coefficient indicating a weight for each of the plurality of nodes, based on caller-callee relationship between nodes in a same layer, the caller-callee relationship being indicated in the configuration information;
calculating a base score for each of the plurality of nodes, based on the alert information and the base score coefficient, the base score being based on the alert;
calculating, for each of pairs, each of which includes a respective node of the plurality of nodes and an adjacent node adjacent to the respective node, a propagation score by multiplying the base score of the adjacent node by a propagation score coefficient based on dependency relationship between the respective node and the adjacent node, the adjacent node being identified for the respective node based on the configuration information;
calculating, for each node of the plurality of nodes, a failure score by summing the base score of said each node and the propagation score corresponding to a pair of said each node and an adjacent node adjacent to said each node; and
identifying one or more nodes that are candidates for a cause of the alert among the plurality of nodes, based on the failure scores of the plurality of nodes.

13. A computer program that causes a computer to perform a process comprising:
acquiring configuration information and alert information, the configuration information indicating inter-node connections between a plurality of nodes included in an information processing system, each of the plurality of nodes belonging to any one of a plurality of layers in the information processing system, the alert information indicating an alert generated in the information processing system;
calculating a base score coefficient indicating a weight for each of the plurality of nodes, based on caller-callee relationship between nodes in a same layer, the caller-callee relationship being indicated in the configuration information;
calculating a base score for each of the plurality of nodes, based on the alert information and the base score coefficient, the base score being based on the alert;
calculating, for each of pairs, each of which includes a respective node of the plurality of nodes and an adjacent node adjacent to the respective node, a propagation score by multiplying the base score of the adjacent node by a propagation score coefficient based on dependency relationship between the respective node and the adjacent node, the adjacent node being identified for the respective node based on the configuration information;
calculating, for each node of the plurality of nodes, a failure score by summing the base score of said each node and the propagation score corresponding to a pair of said each node and an adjacent node adjacent to said each node; and
identifying one or more nodes that are candidates for a cause of the alert among the plurality of nodes, based on the failure scores of the plurality of nodes.

14. The computer program according to claim 13, wherein the calculating of the base score coefficient includes calculating the base score coefficient for each of the plurality of nodes, based on hierarchical relationship across layers to which the plurality of nodes belong in addition to the caller-callee relationship between the nodes in the same layer.

15. The computer program according to claim 13 or 14, wherein the calculating of the base score coefficient includes calculating the base score coefficient for each of nodes belonging to a first layer and including a first node, using a calculation method in which the base score coefficient for the first node increases as the base score coefficients for one or more caller nodes that belong to the first layer and call the first node increase.

16. The computer program according to claim 13, wherein the calculating of the propagation score includes
using a first propagation score coefficient as the propagation score coefficient in a case where the adjacent node depends on the respective node, and
using a second propagation score coefficient lower than the first propagation score coefficient as the propagation score coefficient in a case where the respective node depends on the adjacent node.

17. The computer program according to claim 16, wherein, in the case where the respective node depends on the adjacent node, the calculating of the propagation score includes increasing the second propagation score coefficient as a ratio of an amount of resources allocated from the adjacent node to the respective node relative to an amount of resources held by the adjacent node increases.

18. The computer program according to claim 13, wherein the calculating of the propagation score includes changing the propagation score coefficient used for calculating the propagation score, according to an attribute of the respective node and an attribute of the adjacent node.

19. The computer program according to claim 13, wherein the calculating of the base score coefficient includes calculating the base score for each node of the plurality of nodes, based on a number of alerts output by said each node.

20. The computer program according to claim 19, wherein the calculating of the base score includes calculating the base score for said each node by multiplying, for each abnormality level of abnormality levels of the alerts output by said each node, a number of alerts with said each abnormality level by a weight corresponding to said each abnormality level, summing results of the multiplying, and multiplying a result of the summing by the base score coefficient of said each node.
